# EUROPEAN PATENT APPLICATION

(11) **EP 2 857 357 A1**
(43) Date of publication of application: **08.04.2015**
(21) Application number: 13797690.8
(22) Date of filing: 27.05.2013
(51) Int. Cl.: C01F 5/28, C01B 9/08, C01B 33/107, G02B 1/11

(54) **MAGNESIUM FLUORIDE PARTICLE, METHOD FOR PRODUCING MAGNESIUM FLUORIDE PARTICLE, MAGNESIUM FLUORIDE PARTICLE DISPERSION, METHOD FOR PRODUCING MAGNESIUM FLUORIDE PARTICLE DISPERSION, COMPOSITION FOR FORMING LAYER HAVING LOW REFRACTIVE INDEX, METHOD FOR PRODUCING COMPOSITION FOR FORMING LAYER HAVING LOW REFRACTIVE INDEX, SUBSTRATE WITH LAYER HAVING LOW REFRACTIVE INDEX, AND METHOD FOR PRODUCING SUBSTRATE WITH LAYER HAVING LOW REFRACTIVE INDEX**

(30) Priority: 29.05.2012 JP 2012121514
(71) Applicant: Stella Chemifa Corporation, Osaka 541-0047 (JP)
(72) Inventor: YABUNE, Tatsuhiro, Izumiotsu-shi Osaka 595-0075 (JP); TOMISAKI, Megumi, Izumiotsu-shi Osaka 595-0075 (JP); URAYA, Masanori, Izumiotsu-shi Osaka 595-0075 (JP); TAKATORI, Hiroaki, Izumiotsu-shi Osaka 595-0075 (JP)
(74) Representative: Viering, Jentschura & Partner Patent- und Rechtsanwälte
(86) International application number: PCT/JP2013/064639
(87) International publication number: WO 2013/180062

(57) **Abstract**

Magnesium fluoride particles with a low refractive index excellent in film formability are provided. The magnesium fluoride particles each include at least one magnesium fluoride particulate. The at least one magnesium fluoride particulate each has pores that support a supported substance. Further, the at least one magnesium fluoride particulate includes a plurality of particulates. A grain boundary void-like pore serving as a gap that supports the supported substance is present between particulates adjacent to each other of the plurality of particulates.

## Description

### [TECHNICAL FIELD]

The present invention relates to magnesium fluoride particles, methods for producing magnesium fluoride particles, dispersion solutions of magnesium fluoride particles, methods for producing a dispersion solution of magnesium fluoride particles, compositions for forming a low refractive index layer, methods for producing a composition for forming a low refractive index layer, substrates with a low refractive index layer, and methods for manufacturing a substrate with a low refractive index layer.

### [BACKGROUND ART]

Development in flat panel displays, such as liquid crystal displays (LCDs), plasma display panels (PDPs), and etc. expands the display market. Development in displays that can exhibit high performance in definition, tone, and contrast is being promoted. Accompanied by development in displays that can exhibit such high performance, application of antireflection layers to the surfaces of the displays is becoming popular. An antireflection layer includes a high refractive index layer and a low refractive index layer and prevents external light reflection on the surface of a display by utilizing phase difference of light reflected on the surface of each substance of the high refractive index layer and the low refractive index layer.

Methods for forming a low refractive index layer are divided into gas phase methods and coating methods. Particularly, the coating methods are excellent in utilization efficiency of materials and are superior to the gas phase methods in mass production and facility cost. For this reason, the coating methods, which are excellent in producibility, are employed currently for forming the low refractive index layers.

In particular, it has been known that magnesium fluoride sol and fine powder of magnesium fluoride are effective as micro-fillers of low refractive layer coating agents (PLT 1 and PLT 2). Further, referring to methods for forming a low refractive index layer, a method has been known in which air babbles having a refractive index of 1 and a size not exceeding the wavelength of visible light are included inside a coating film forming the low refractive index layer to reduce the refractive index of the coating film as a whole. For example, such a method includes allowing hollow particulates, such as hollow silica, etc. to be included inside a coating film (PLT 3 and PLT 4).

### [Citation List]

### [Patent Literature]

[PLT 1] Japanese Patent Application Laid-Open Publication No. 63-124332
[PLT 2] Japanese Patent Application Laid-Open Publication No. 2-26824
[PLT 3] Japanese Patent Application Laid-Open Publication No. 2001-167637
[PLT 4] Japanese Patent Application Laid-Open Publication No. 2002-265866

### [SUMMARY OF THE INVENTION]

### [Technical Problems]

Referring to PL1 and PL2, in order to obtain excellent transparency, the dispersibility of magnesium fluoride must be increased, while reduction in size of primary particles lowers the producibility. In PL3 and PL4, the use of the hollow silica particles enables formation of a hard coating film but may reduce mechanical strength and abrasion resistance.

The present invention has been made in view of the foregoing and has its object of providing magnesium fluoride particles with a low refractive index excellent in film formability, a method for producing magnesium fluoride particles, a dispersion solution of magnesium fluoride particles, a method for producing a dispersion solution of magnesium fluoride particles, a composition for forming a low refractive index layer, a method for producing a composition for forming a low refractive index layer, a substrate with a low refractive index layer, and a method for manufacturing a substrate with a low refractive index layer.

### [Solution to Problems]

In order to achieve the above object, the magnesium fluoride particles according to the present invention each include at least one magnesium fluoride particulate. The at least one magnesium fluoride particulate each has pores that support a supported substance.

The at least one magnesium fluoride particulate may include a plurality of particulates. A grain boundary void-like pore serving as a gap that supports the supported substance may be present between particulates adjacent to each other of the plurality of particulates.

The pores may support the supported substance. The supported substance may be a material used in a process of generating the at least one magnesium fluoride particulate.

The pores may support the supported substance. The supported substance may have a refractive index lower than the at least one magnesium fluoride particulate.

The supported substance may be at least one of a gas containing an inert gas and a liquid containing an organic solution.

The pores each may be at least one of an intra-particulate open pore present in a state opened at the surface of the magnesium fluoride particulate and an intra-particulate closed pore present in a state occluded from the surface of the magnesium fluoride particulate inside the magnesium fluoride particulate.

The grain boundary void-like pore may be at least one of a grain boundary void-like open pore present in an opened state and a grain boundary void-like closed pore present in an occluded state.

An average particle size of the magnesium fluoride particulates may be in a range between 1 nm and 100 nm.

An average particle size of the magnesium fluoride particulates may be in a range between 1 nm and 50 nm.

The magnesium fluoride particulate may have a refractive index in a range of 1.20 or higher and 1.40 or lower.

The magnesium fluoride particulate may have a specific surface area by BET in a range of 150 m²/g or larger and 300 m²/g or smaller.

In order to achieve the above object, a dispersion solution of magnesium fluoride particles according to the present invention includes the above magnesium fluoride particles and a dispersion medium that disperses the magnesium fluoride particles.

The dispersion medium may include a dispersant that promotes dispersion of the magnesium fluoride particles.

In order to achieve the above object, a composition for forming a low refractive index layer according to the present invention includes the above magnesium fluoride particles and a layer forming material in which the magnesium fluoride particles are dispersed.

In order to achieve the above object, a substrate with a low refractive index layer according to the present invention includes a resin substrate; a hard coated layer formed on the resin substrate; and a low refractive index layer formed on the hard coated layer. The low refractive index layer is formed of the above composition for forming a low refractive index layer.

In order to achieve the above object, a method for producing magnesium fluoride particles according to the present invention, wherein the magnesium fluoride particles each include at least one magnesium fluoride particulate, includes: preparing crystalline magnesium fluorosilicate; generating crystalline magnesium fluoride having pores that support a supported substance by discharging gas from the crystalline magnesium fluorosilicate by performing thermal treatment on the crystalline magnesium fluorosilicate; and generating magnesium fluoride particulates having the pores from the crystalline magnesium fluoride.

The at least one magnesium fluoride particulates may include a plurality of particulates. The generating crystalline magnesium fluoride may include: agglomerating particulates adjacent to each other of the plurality of particulates so as to form a grain boundary void-like pore between the particulates adjacent to each other and the grain boundary void-like pore serves as a gap that supports the supported substance.

The generating crystalline magnesium fluoride may include at least one of forming an intra-particulate open pore present in a state opened at the surface of the magnesium fluoride particulate and forming an intra-particulate closed pore present in a state occluded from the surface of the magnesium fluoride particulate inside the magnesium fluoride particulate.

The agglomerating may include at least one of forming a grain boundary void-like open pore present in an opened state and forming a grain boundary void-like closed pore present in an occluded state.

The preparing may include: generating slurry of agglomerated magnesium fluorosilicate particles from a mixed solution of a magnesium salt and a solution containing a fluorosilicate ion; generating paste of magnesium fluorosilicate particles from the slurry of agglomerated magnesium fluorosilicate particles; generating magnesium fluorosilicate particles from the paste of magnesium fluorosilicate particles; generating slurry of magnesium fluorosilicate particulates by crushing the magnesium fluorosilicate particles; and generating the crystalline magnesium fluorosilicate from the slurry of magnesium fluorosilicate particulates.

In order to achieve the above object, a method for producing a dispersion solution of magnesium fluoride particles according to the present invention includes preparing the above magnesium fluoride particles and dispersing the magnesium fluoride particles into a dispersion medium.

The dispersion medium may include a dispersant that promotes dispersion of the magnesium fluoride particles.

In order to achieve the above object, a method for producing a composition for forming a low refractive index layer according to the present invention includes preparing the above magnesium fluoride particles and dispersing the magnesium fluoride particles into a layer forming material.

In order to achieve the above object, a method for manufacturing a substrate with a low refractive index layer according to the present invention includes: preparing a resin substrate; forming a hard coated layer on the resin substrate; and forming a low refractive index layer on the hard coated layer. The low refractive index layer is formed of the above composition for forming a low refractive index layer.

### [BRIEF DESCRIPTION OF DRAWINGS]

FIG. 1 is a schematic illustration showing a magnesium fluoride particle according to one embodiment of the present invention.
FIG. 2 is a schematic cross sectional view of the magnesium fluoride particle according to one embodiment of the present invention.
FIG. 3 shows an image of the magnesium fluoride particle by a transmission electron microscope (TEM) according to one embodiment of the present invention.
FIG. 4 is a flowchart depicting a method for producing magnesium fluoride particles according to one embodiment of the present invention.
FIG. 5 is a schematic illustration showing a dispersion solution of magnesium the fluoride particles according to one embodiment of the present invention.
FIG. 6 is a flowchart depicting a method for producing the dispersion solution of the magnesium fluoride particles according to one embodiment of the present invention.
FIG. 7 is a schematic illustration showing a composition for forming a low refractive index layer according to one embodiment of the present invention.
FIG. 8 is a flowchart depicting a method for producing the composition for forming a low refractive index layer according to one embodiment of the present invention.
FIG. 9 is a schematic illustration showing a substrate with a low refractive index layer according to one embodiment of the present invention.
FIG. 10 is a table indicating measurement results of magnesium fluoride particles, low refractive index layers, and substrates with a low refractive index layer, which are produced or manufactured by executing Examples and Comparative Examples.

### [DESRIPTION OF EMBODIMENTS]

Description will be made below with reference to the accompanying drawings about magnesium fluoride particles, a method for producing magnesium fluoride particles, a dispersion solution of magnesium fluoride particles, a method for producing a dispersion solution of magnesium fluoride particles, a composition for forming a low refractive index layer, a method for producing a composition for forming a low refractive index layer, a substrate with a low refractive index layer, and a method for manufacturing a substrate with a low refractive index layer according to embodiments of the present invention.

### [Magnesium Fluoride Particles]

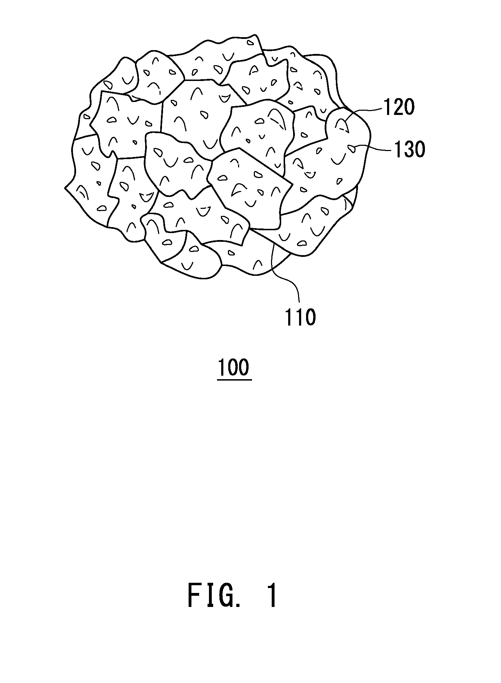

FIG. 1 is a schematic illustration showing one of magnesium fluoride particles 100 according to one embodiment of the present invention. Each magnesium fluoride particle 100 includes at least one particulate 110. The particulate 110 is a magnesium fluoride particulate. The particulate 110 has a plurality of projections and recesses 120 present at the surface of the particulate 110. The particulate 110 has a plurality of pores 130 that support a supported substance. The particulate 110 has a hole structure.

The pores 130 can be present in a state opened at the surface of the particulate 110. Further, the pores 130 can be present in a state occluded from the surface of the particulate 110 inside the particulate 110. Where each magnesium fluoride particle 100 includes a plurality of particulates 110, a gap that supports the supported substance is formed between particulates adjacent to each other of the plurality of particulates 110. Thus, the gap forms a pore. The magnesium fluoride particle 100 preferably has a larger specific surface area and a large number of pores 130.

The supported substance that the pores 130 support is a substance used in the process of generating particulates 110. For example, the supported substance is at least one of gas including a gaseous substance (e.g., an atmospheric gas, such as an inert gas, etc. and air) and liquid including an organic solution. The pores 130 can support a single type or a combination of two or more types of them. For example, the supported substance can have a refractive index lower than the particulates 110.

The average particle size of the magnesium fluoride particles 100 is in the range of 1 nm or lager and 100 nm or smaller, preferably 1 nm or larger and 50 nm or smaller, and more preferably 1 nm or larger and 30 nm or smaller. When the average particle size of the magnesium fluoride particles 100 is in the range of 1 nm or larger and 50 nm or smaller, the magnesium fluoride particles 100 can be easily dispersed into any constituent for forming a low refractive index layer. In turn, it is suitable for forming a low refractive index layer (with a layer thickness of 50 nm to 300nm) or a substrate with a low refractive index layer. The average particle size is 1 nm or larger contributes to no reduction in effect obtained with low refractivity and to stable dispersion. It is noted that the average particle size is a particle size defined where of entire sample particles, 50 volume% of the particles have a particle size equal to or smaller than the average particle size (d50).

The magnesium fluoride particles 100 have a specific surface area in the range between 150 m²/g and 300 m²/g. The specific surface area being in the range between 150 m²/g and 300 m²/g can achieve excellent film formability and is therefore preferable. The specific surface area being equal to or larger than 150 m²/g means that the particulates having no pore are less included in the magnesium fluoride particles 100. Further, when the specific surface area is equal to or smaller than 300 m²/g, the mechanical strength of the magnesium fluoride particles 100 can be maintained at a given level or higher.

The magnesium fluoride particles 100 have a refractive index in the range of 1.20 or higher and 1.40 or lower, and preferably in the range of 1.20 or higher and 1.36 or lower. The magnesium fluoride particles 100 having a refractive index in the range of 1.20 or higher and 1.40 or lower can reduce the reflectance of the film, which is preferable. In particular, when the magnesium fluoride particles 100 have a refractive index of 1.20 or higher, the strength of the magnesium fluoride particles 100 can be maintained. Further, when the magnesium fluoride particles 100 have a refractive index of 1.40 or lower, a low refractive index layer including the magnesium fluoride particles 100 and a substrate including such a low refractive index layer can exhibit sufficient anti-reflection effect.

The refractive index of magnesium fluoride is generally in the range of 1.37 or higher and 1.42 or lower, which is higher than the refractive index of the magnesium fluoride particles 100. From this tendency, it is understood that the magnesium fluoride particles 100 have a hole structure and that the magnesium fluoride particles 100 have the pores 130. It is noted that the refractive index of the magnesium fluoride particles 100 can be controlled according to the shape of the pores 130 and the substance (i.e., a solvent or gas) present inside the pores 130. When the refractive index of the supported substance supported by the pores 130 is lower than that of the particulates 110, the refractive index of the magnesium fluoride particles 100 is lower than that of the particulates 110.

It is noted that the refractive index of a low refractive index layer including the magnesium fluoride particles 100 is lower than that of a low refractive index layer including magnesium fluoride particulates produced by a method different from the method according to the present invention. Further, the refractive index of the low refractive index layer including the magnesium fluoride particles 100 is lower than that of a low refractive index layer including particulates (e.g., silica particulates) other than the magnesium fluoride particulates.

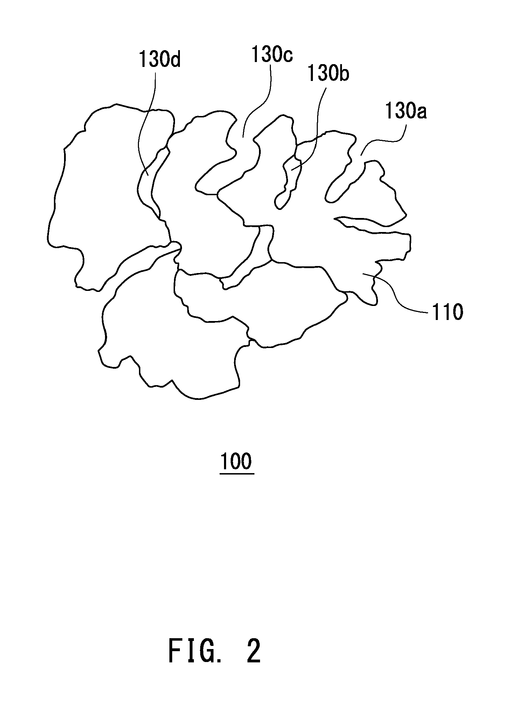

FIG. 2 is a schematic cross sectional view of the magnesium fluoride particle 100 according to one embodiment of the present invention. With reference to FIG. 2, some types of the pores 130 that the magnesium fluoride particle 100 has will be described. Each pore 130 is at least one of an intra-particulate open pore 130a, an intra-particulate closed pore 130b, a grain boundary void-like open pore 130c, and a grain boundary void-like closed pore 130d.

The intra-particulate open pore 130a is a pore present in a state opened at the surface of the particulate 110. Where multiple intra-particulate open pores 130a are present in the particulate 110, the particulate 110 is porous. The intra-particulate closed pore 130b is a pore present in a state occluded from the surface of the particulate 110 inside the particulate 110. The intra-particulate closed pore 130b is closed at the surface of the particulate 110 and is isolated inside the particulate 110. Where multiple intra-particulate closed pores 130b are preset in the particulate 110, the particulate 110 is partially hollow.

Where the magnesium fluoride particle 100 includes a plurality of particulates 110, the magnesium fluoride particle 100 has gaps that support the supported substance between adjacent particulates 110 to allow the gaps to serve as grain boundary void-like pores. The grain boundary void-like pores are divided into the grain boundary void-like open pores 130c and the grain boundary void-like closed pores 130d. The grain boundary void-like open pores 130c are grain boundary void-like pores present in an opened state. The grain boundary void-like closed pores 130d are grain boundary void-like pores present in an occluded state. The grain boundary void-like closed pores 130d are closed at the surface of the magnesium fluoride particle 100 and are isolated inside the magnesium fluoride particle 100.

The pores 130 of the particulate 110 are formed in the process of producing the magnesium fluoride particles 100. Thermal decomposition of crystalline magnesium fluorosilicate generates SiF₄ gas from the crystalline magnesium fluorosilicate. The SiF₄ gas is discharged outside the crystalline magnesium fluorosilicate to generate crystalline magnesium fluoride. Gas discharge forms the pores in the crystalline magnesium fluoride. Further, the crystalline magnesium fluorosilicate changes in volume at gas discharge, so that the generated crystalline magnesium fluoride is refined to be particulates. At the same time, agglomeration of the particulates is maintained, or the particulates are agglomerated newly.

The magnesium fluoride particulates fuse together by thermal treatment to form the magnesium fluoride particles. The magnesium fluoride particles formed by fusing the particulates can include particles of agglomerated particulates. Crushing the magnesium fluoride particles can obtain the magnesium fluoride particles 100.

Of the pores 130, the intra-particulate open pore 130a and the intra-particulate closed pore 130b are formed at discharge of the SiF₄ gas from the inside of the crystalline magnesium fluorosilicate. The intra-particulate open pore 130a is a trace of the gas discharge also. A gas (e.g., an inert gas, such as nitrogen gas, etc. or air) used in the thermal treatment may remain in the intra-particulate open pore 130a and the intra-particulate closed pore 130b to be supported. A liquid or solvent used in the process of producing the magnesium fluoride particles 100 may also be supported in the intra-particulate open pore 130a and the intra-particulate closed pore 130b.

Of the pores 130, the intra-particulate closed pore 130b is formed, besides by discharge of the SiF₄ gas, in such a manner that the opening of the intra-particulate open pore 130a is closed at crystal growth of the magnesium fluoride particulates by thermal treatment. For example, the intra-particulate closed pore 130b is formed in such a manner that the intra-particulate open pore 130a is deformed to close the opening at the surface of the particulate 110. The gas (e.g., an atmospheric gas, such as nitrogen gas, etc. or air) confined inside the pores in the process of closing the opening of the intra-particulate open pore 130a can be supported in the intra-particulate closed pore 130b. A liquid or solvent used in the process of producing the magnesium fluoride particles 100 may also be supported in the intra-particulate closed pore 130b.

The grain boundary void-like open pore 130c is formed in the process of agglomeration or fusion of the magnesium fluoride particulates by thermal treatment. A liquid, solvent or gas (e.g., an atmospheric gas, such as nitrogen gas, etc. or air) used in the process of producing the magnesium fluoride particles 100 can be supported in the grain boundary void-like open pore 130c.

The grain boundary void-like closed pore 130d is formed in such a manner that the opening of the grain boundary void-like open pore 130c is closed in the process of agglomeration or fusion of the magnesium fluoride particulates. A gas (e.g., an atmospheric gas, such as nitrogen gas, etc. or air) can be supported in the grain boundary void-like closed pore 130d in the process of agglomeration or fusion of the magnesium fluoride particulates. A liquid or solvent used in the process of producing the magnesium fluoride particles 100 can also be supported in the grain boundary void-like closed pore 130d. In the grain boundary void-like closed pore 130d, the supported substance having a refractive index lower than that of the particulates 110 may be supported.

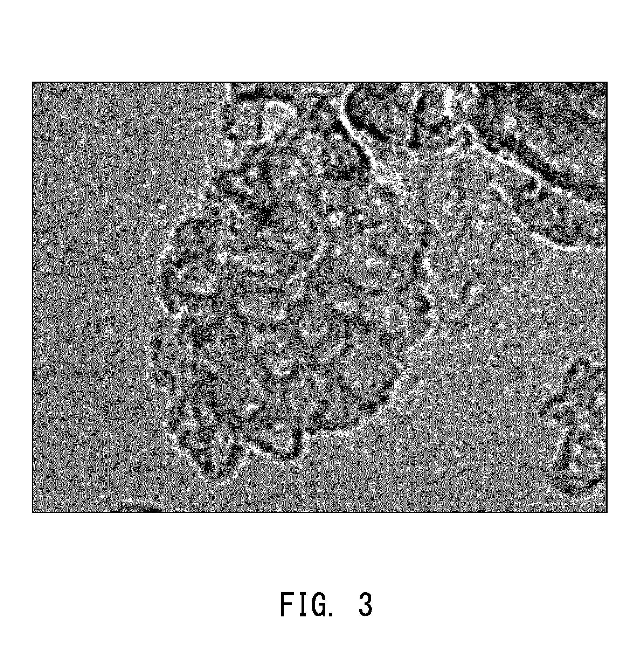

FIG. 3 shows an image of a magnesium fluoride particle 100 by a transmission electron microscope (TEM) according to one embodiment of the present invention. The projective photograph was obtained by photographing the magnesium fluoride particle 100 by a TEM (HF-2000 by Hitachi Ltd.) at a magnification of 500000X.

### [Method for Producing Magnesium Fluoride Particles]

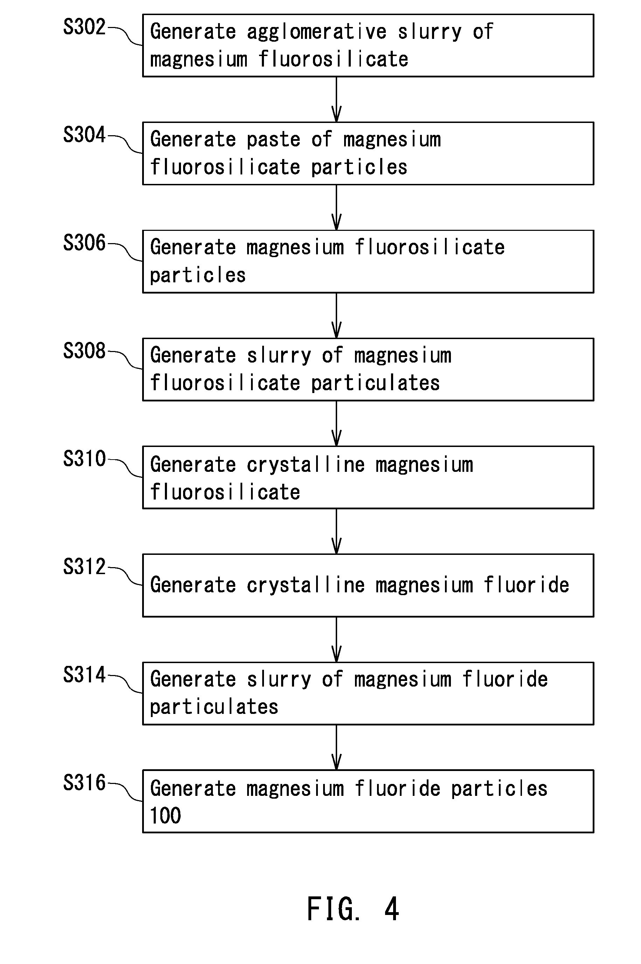

FIG. 4 is a flowchart depicting a method for producing the magnesium fluoride particles 100 according to one embodiment of the present invention. The magnesium fluoride particles 100 can be produced by executing Steps S302-S316. Execution of Steps S302-S306 can generate magnesium fluorosilicate particles. Execution of Step S308 can generate slurry of magnesium fluorosilicate particulates. Execution of Step S310 can generate crystalline magnesium fluorosilicate. Execution of Step S312 can generate crystalline magnesium fluoride. Execution of Step S314 can generate slurry of magnesium fluoride particulates. Further, execution of Step S316 can generate the magnesium fluoride particles 100. It is noted that in the present embodiment, Steps S302-S310 function as steps of preparing crystalline magnesium fluorosilicate. Description about the method for producing the magnesium fluoride particles 100 will be made with reference to FIG. 4.

Step S302: Magnesium salt and a solution containing fluorosilicate ions are mixed together to generate slurry of agglomerated magnesium fluorosilicate particles. The mixing temperature is set at 50°C or higher and 90°C or lower.

The magnesium salt is at least one selected from, for example, magnesium chloride, magnesium carbonate, magnesium hydroxide, magnesium sulfate, magnesium acetate, magnesium sulfamate, magnesium formate, magnesium citrate, magnesium benzoate, and magnesium oxalate. Sole use of single one and mixed use of two or more of them are possible. The fluorosilicate ions are at least one type of, for example, fluorosilicate ions dissociated and produced from fluorosilicate (e.g., sodium fluorosilicate, potassium fluorosilicate, cesium fluorosilicate, hydrogen fluorosilicate, ammonium fluorosilicate, quaternary ammonium fluorosilicate, etc.). Sole use of single one and mixed use of two or more of them are possible.

Although not specifically limited, in order to efficiently produce the slurry of agglomerated magnesium fluorosilicate particles, the molar ratio between fluorosilicate ions and magnesium ions dissociated and generated from the magnesium salt is preferably around the stoichiometric ratio. Specifically, it is preferable that the value of the fluorosilicate ions per the magnesium ions is 1.0 or larger and 2.0 or smaller. More preferably, the value of the fluorosilicate ions per the magnesium ions is 1.0 or larger and 1.5 or smaller.

Among methods for mixing the magnesium salt with the solution containing the fluorosilicate ions, there may be a method in which the solution containing the fluorosilicate ions is mixed with an aqueous solution generated in advance by solving the magnesium salt in water and the like. Although not limited specifically, it is preferable as the mixing method to mix the magnesium salt with the solution containing the fluorosilicate ions. It is because when compared with a method of mixing the solution containing the fluorosilicate ions with the magnesium salt, it is easy to make the magnesium fluorosilicate particles included in the obtained slurry of agglomerates to be uniform in size. Further, rather than mixing at once, slow mixing at a constant speed can easily make the magnesium fluorosilicate particles included in the slurry of agglomerated particles uniform in size.

The mixing temperature may be 0°C or higher and 100°C or lower, but is preferably 50°C or higher and 90°C or lower. Setting the mixing temperature at 50°C or higher can suppress generation of water of crystallization much contained in the generated magnesium fluorosilicate. As a result, a coating film, which is formed by coating organosol of the magnesium fluoride particles 100, can be prevented from being white. Setting the mixing temperature at 90°C or lower can suppress increase in particle size of the magnesium fluorosilicate particles included in the slurry of agglomerates.

Moreover, the mixing period is preferably 0.1 hour or longer and 1 hour or shorter. The mixing period of 0.1 hour or longer can result in easy uniform mixing of the magnesium salt with the solution containing the fluorosilicate ions. Further, the mixing period of 1 hour or shorter can suppress increase in particle size of the magnesium fluorosilicate particles included in the slurry of agglomerated particles. In addition, the magnesium fluoride particles 100 can be yielded with excellent producibility.

Step S304: The slurry of the agglomerated magnesium fluorosilicate particles is washed to generate paste of the magnesium fluorosilicate particles.

To wash the slurry of the agglomerated magnesium fluorosilicate particles means to remove non-reacted materials and byproducts contained in the slurry of the agglomerated magnesium fluorosilicate particles. Although suction filtration, pressure filtration, centrifugation, and the like can remove the non-reacted materials and byproducts, the removing method is not limited to the foregoing as long as the non-reacted materials and byproducts can be removed. Further, the conductivity of waste liquid after washing is preferably 1.0 mS/cm or lower. It is because the conductivity of 1.0 mS/cm or lower hardly causes the non-reacted material and byproducts to inhibit dispersion. In addition, removal of water by suction filtration, pressure filtration, centrifugation, or the like can generate paste of the magnesium fluorosilicate particles from the slurry of the agglomerated magnesium fluorosilicate particles, thereby facilitating drying in the next step.

Step S306: The paste of the magnesium fluorosilicate particles is dried to generate the magnesium fluorosilicate particles. The drying temperature is 50°C or higher and 110°C or lower.

Water in the paste of the magnesium fluorosilicate particles is further removed to obtain magnesium fluorosilicate particles in powder form. Examples of the method for removing water from the paste of the magnesium fluorosilicate particles to obtain the powder include drying under reduced pressure and thermal dry using an oven. In order to suppress agglomeration by drying, drying under an inert gas (e.g., N₂ gas) atmosphere at a temperature of 50°C or higher and 110°C or lower is preferable. In order to further suppress agglomeration by drying, a dryer (spray dryer or the like) may be used. In addition, in order to lower the drying temperature, water contained in the paste of the magnesium fluorosilicate particles can be substituted by hydrophilic organic solvent having a low boiling point (e.g., methanol, ethanol, acetone, etc.)

Step S308: The magnesium fluorosilicate particles are mixed with a solution, and are crushed to generate slurry of magnesium fluorosilicate particulates. The average particle size of the magnesium fluorosilicate particulates is 1 nm or larger and 100 nm or smaller. A bead mill was used as a disperser.

The solution means especially an organic solution and is, for example, a dispersion medium having an acid functional group or liquid organic matter. Further, the solvent may be a dispersion medium containing an organic solution. As the dispersion medium, a mixed medium of water and a water-soluble organic solution is used in general. Examples of the water-soluble organic solution include isopropanol in practice. Further, in order to increase the dispersibility of the magnesium fluorosilicate particles, a dispersant (e.g., a surfactant) may be added appropriately to the dispersion medium.

As the dispersant, a non-ionic or anionic hydrocarbon-based dispersant, or a non-ionic or anionic fluorinated dispersant may be used. In view of long-term stability in a dispersed state, the dispersant is at least one selected from, for example, polyoxyethylene tridecyl ether phosphate, polyoxyethylene isodecyl ether, sorbitan monooleate, and polyvinylpyrrolidone. Sole use of single one and mixed use of two or more of them are possible.

The solid concentration in the dispersion medium is generally in the range of 1 mass% or higher and 15 mass% or lower, preferably 2 mass% or higher and 10 mass% or lower, and more preferably 2 mass% or higher and 8 mass% or lower. The solid concentration of 1 mass% or higher in the dispersion medium can achieve practical efficiency in the process. The solid concentration of 15 mass% or lower in the dispersion medium can create an excellent dispersion state.

The disperser used for crushing the magnesium fluorosilicate particles is at least one of, for example, a paint conditioner (Red Devil, Inc.), ball mill, sand mill, bead mill (Dinomill manufactured by Shinmaru Enterprises Corporation or MSC 100 manufactured by NIPPON COKE & ENGINEERING CO., LTD., etc.), attritor, pearl mill (DCP mill manufactured by Maschinenfabuk Gustav Eirich GmbH & Co KG, etc.), CoBall Mill, homomixer, homogenizer (CLEARMIX manufactured by M Technique Co., Ltd., etc.), and wet type jet mill (GENUS PY manufactured by GENUS Co., Ltd., Nanomizer manufactured by NANOMIZER Inc., etc.). Further, after dry processing by an attritor, two-roll dry processing, or the like is performed on a mixed solution of the magnesium fluorosilicate particles in paste form and a dispersant having an acid functional group, and an organic solvent is added thereto, the resultant substance can be dispersed by a disperser. It is noted that where a medium is used in a disperser, the medium is preferably zirconia bead or the like.

Step S310: The slurry of the magnesium fluorosilicate particulates is subjected to evaporation to dryness to generate crystalline magnesium fluorosilicate. The temperature of evaporation to dryness is 50°C or higher and 110°C or lower. It is preferable that evaporation to dryness similar to drying executed in Step S306 is executed to obtain crystalline magnesium fluorosilicate in powder form.

Step S312: Thermal treatment is performed on the crystalline magnesium fluorosilicate to generate crystalline magnesium fluoride). The thermal treatment is preferably performed at a temperature of 300°C or higher and 900°C or lower under an inert gas (e.g., N₂ gas) atmosphere. The thermal treatment is more preferably performed at a temperature of 400°C or higher and 900°C or lower under an inert gas (e.g., N₂ gas) atmosphere. When the temperature of the thermal treatment is 300°C or higher, there is no need to consider residues of undecomposed magnesium fluorosilicate. While, when the temperature of the thermal treatment is 900°C or lower, growth of the decomposed and generated crystalline magnesium fluoride can be suppressed to prevent significant increase in their particle size. Further, owing to the thermal treatment under an inert gas atmosphere, there is no need to consider generation of oxides and the like.

The period of the thermal treatment is preferably one hour or longer and eight hours or shorter, and more preferably three hours or longer and eight hours or shorter. When the period of the thermal treatment is one hour or longer, there is no need to consider residues of undecomposed magnesium fluorosilicate. While, when the period of the thermal treatment is eight hours or shorter, growth of the decomposed and generated crystalline magnesium fluoride can be suppressed, thereby preventing significant increase in their particle size. It is noted that where a low refractive index layer is formed using a dispersion solution of magnesium fluoride particles containing undecomposed magnesium fluorosilicate, degradation of resin contained in the low refractive index layer, which is caused due to the presence of an acid, is concerned.

Step S314: The crystalline magnesium fluoride is mixed with a solution and is crushed to generate slurry of the magnesium fluoride particulates. The average particle size of the magnesium fluoride particulates is 1 nm or larger and 100 nm or smaller. A bead mill was used as the disperser.

The solution means especially an organic solution, and is, for example, a dispersion medium having an acid functional group or liquid organic matter. Further, the solution may be a dispersion medium containing an organic solution. The organic solution is preferably the same solution as that used in Step 308.

The solid concentration in the dispersion medium is generally in the range of 1 mass% or higher and 15 mass% or lower, preferably 2 mass% or higher and 10 mass% or lower, and more preferably 2 mass% or higher and 8 mass% or lower. The solid concentration of 1 mass% or higher in the dispersion medium can achieve practical efficiency in the process. The solid concentration of 15 mass% or lower in the dispersion medium can create an excellent dispersion state.

Step S316: The slurry of the magnesium fluoride particulates is subjected to evaporation to dryness and then to thermal treatment to generate the magnesium fluoride particles 100. The temperature of evaporation to dryness is 50°C or higher and 110°C or lower. It is preferable to perform evaporation to dryness by the same method as that performed in Step S310 and thermal treatment by the same method as that performed in Step S312 to obtain the magnesium fluoride particles 100.

It should be noted that the thermal treatment is preferably performed at a temperature of 200°C or higher and 400°C or lower under an inert gas (e.g., N₂ gas) atmosphere. When the temperature of the thermal treatment is 200°C or higher, there is no need to consider a residual solvent. While, when the temperature of the thermal treatment is 400°C or lower, growth of the crystalline magnesium fluoride particles 100 can be suppressed to prevent significant increase in their particle size. Further, owing to the thermal treatment under a N₂ gas atmosphere, there is no need to consider generation of oxides and the like. Where the period of the thermal treatment is one hour or longer, there is no need to consider a residual solvent. While, where the period of the thermal treatment is three hours or shorter, crystal growth of the magnesium fluoride particles 100 can be suppressed to prevent significant increase in their particle size.

With reference to FIG. 4, Steps S302-S316 have been described. The magnesium fluorosilicate forms a squamous crystal. Execution of Step S302 can obtain agglomerates of the magnesium fluorosilicate particles. The particle size of the agglomerates is several hundred nm to several ten µm, while the average particle size of particles that form an agglomerate (hereinafter referred to as primary particles) is 50 nm or smaller. The agglomerates of the magnesium fluorosilicate particles can be easily dispersed into the primary particles (with an average particle size of 1 nm or larger and 50 nm or smaller) by a bead mill. Evaporation to dryness performed in Step S310 can cause again agglomeration of particles, thereby obtaining crystalline magnesium fluorosilicate.

Moreover, the thermal treatment performed at Step S312 can thermally decompose the crystalline magnesium fluorosilicate to obtain crystalline magnesium fluoride. The reaction of the thermal decomposition generates SiF₄ gas from the crystalline magnesium fluorosilicate. The SiF₄ gas is discharged outside the crystalline magnesium fluorosilicate to generate crystalline magnesium fluoride. Gas discharge forms the pores in the crystalline magnesium fluoride. Further, the crystalline magnesium fluorosilicate changes in volume at the gas discharge, so that the generated crystalline magnesium fluoride is refined to be particulates. At the same time, agglomeration of the particulates is maintained, or the particulates are agglomerated newly.

The magnesium fluoride particulates glow to be particles by thermal treatment, thereby forming magnesium fluoride particles. In the process of particle growth, the particulates are agglomerated or fused. The magnesium fluoride particles formed by agglomeration or fusion of the particulates can include agglomerates of the particulates and particulates to which the particulates are fused. Crushing the magnesium fluoride particles can result in the magnesium fluoride particles 100 with an average particle size of 1 nm or larger and 100 nm or smaller.

### [Dispersion Solution of Magnesium Fluoride Particles]

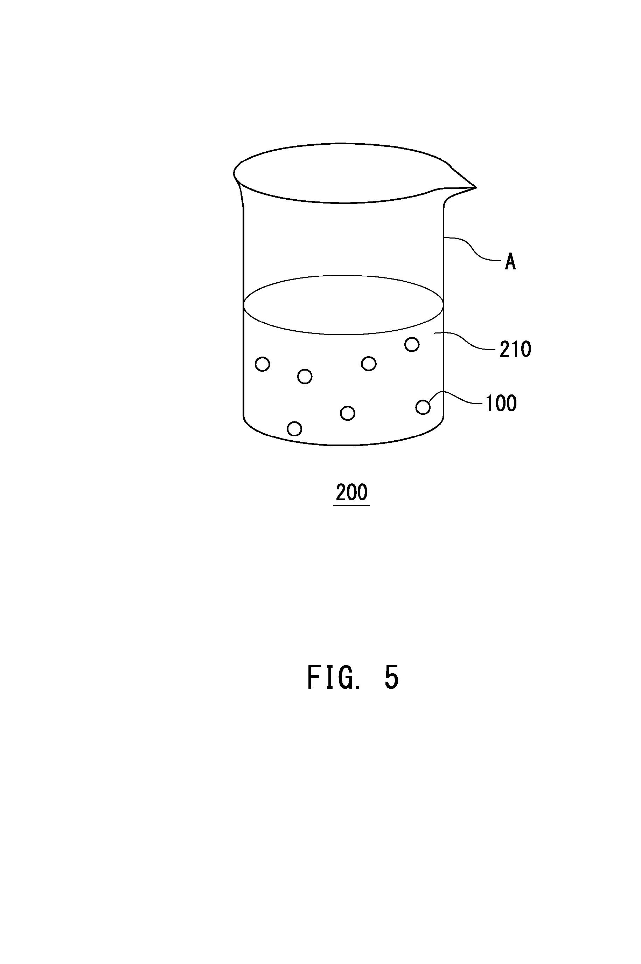

FIG. 5 is a schematic illustration showing a dispersion solution 200 of magnesium fluoride particles according to one embodiment of the present invention. In FIG. 5, the dispersion solution 200 of magnesium fluoride particles includes the magnesium fluoride particles 100 and a dispersion medium 210 and is put in a vessel A. The magnesium fluoride particles 100 are dispersed in the dispersion medium 210. It is noted that the dispersion solution 200 of magnesium fluoride particles is a dispersion solution in a sol state with the magnesium fluoride particles 100 as a dispersoid and can be called magnesium fluoride sol.

The dispersion medium 210 is water or an organic dispersion solution. The organic dispersion solution is at least one selected from, for example, alcohols (e.g., methanol, ethanol, isopropanol, butanol, etc.), ketones (acetone, MEK, MIBK, etc.), esters (ethyl acetate, butyl acetate, etc.), aromatics (toluene, xylene, etc.), ethers (methyl cellosolve, ethyl cellosolve, etc.). Sole use of single one and mixed use of two or more of them are possible. In addition, the dispersion medium 210 may be a mixed dispersion solution of an organic dispersion solution and water. It is noted that when the dispersion solution 200 of the magnesium fluoride particles is applied to a composition for forming a low refractive index layer, it is desirable to use an organic dispersion solution having volatility to the extent that no problem is caused in forming the low refractive index layer.

The solid concentration in the dispersion solution 200 of magnesium fluoride particles is generally in the range of 1 mass% or higher and 15 mass% or lower, preferably between 1 mass% and 10 mass%, more preferably 2 mass% or higher and 8 mass% or lower. When the solid concentration in the dispersion solution 200 of magnesium fluoride particles is 1 mass% or higher, the solution 200 is not so diluted as to necessitate concentration processing. While, when the solid concentration in the dispersion solution 200 of magnesium fluoride particles is 15 mass% or lower, the magnesium fluoride particles 100 are hard to be agglomerated, which can easily result in an excellent dispersed state.

### [Method for Producing Dispersion Solution of Magnesium Fluoride Particles]

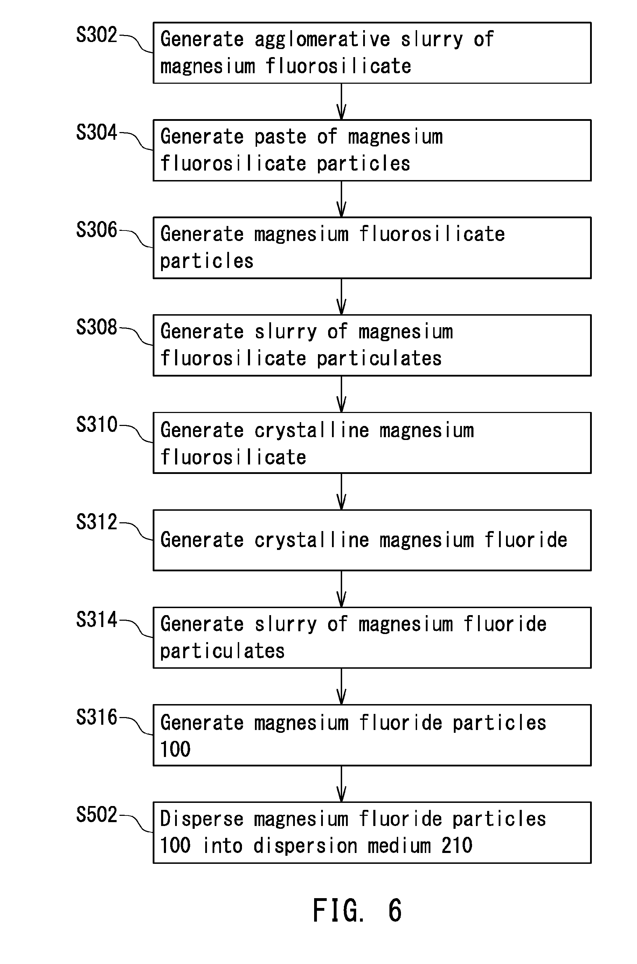

FIG. 6 is a flowchart depicting a method for producing the dispersion solution 200 of magnesium fluoride particles according to one embodiment of the present invention. The dispersion solution 200 of magnesium fluoride particles can be produced by executing Steps S302-S316 and Step S502. Steps S302-S316 are the same as those described with reference to FIG. 4. Therefore, detailed description thereof is omitted.

Steps S302-S316 are executed to obtain the magnesium fluoride particles 100.

Step S502: The magnesium fluoride particles 100 are dispersed into the dispersion medium 210 to obtain the dispersion solution 200 of magnesium fluoride particles.

It is noted that when the solution used in Step S314 is used as the dispersion medium 210, Step S316 of Steps S302- S316 and S502 can be omitted out.

Moreover, in order to enhance the dispersibility of the magnesium fluoride particles 100, a dispersant (a surfactant or the like) may be appropriately added to the dispersion medium 210. As the dispersant, a non-ionic or anionic hydrocarbon-based dispersant or a non-ionic or anionic fluorinated dispersant may be used similarly to those in Step S308. In view of long-term stability in a dispersed state, the dispersant is at least one selected from, for example, polyoxyethylene tridecyl ether phosphate, polyoxyethylene isodecyl ether, sorbitan monooleate, and polyvinylpyrrolidone. Sole use of single one and mixed use of two or more of them are possible.

### [Composition 300 for Forming Low Refractive Index Layer]

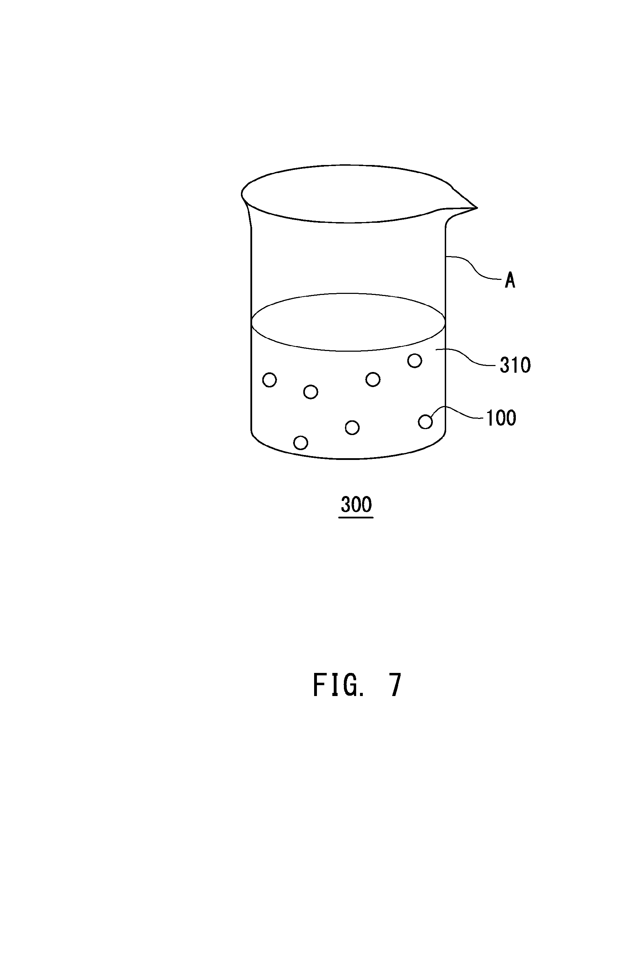

FIG. 7 is a schematic illustration showing a composition 300 for forming a low refractive index layer according to one embodiment of the present invention. In FIG. 7, the composition 300 for forming a low refractive index layer includes the magnesium fluoride particulates 100 and a binder 310 and is put in the vessel A.

The binder 310 is a layer forming material to disperse the magnesium fluoride particles 100 and may be a conventionally known binder. The binder 310 is at least one selected from, for example, coating resin, polymerizable monomers, hydrolyzable organic metal compounds, and silicate solution (silicate soda, etc.). Sole use of single one and mixed use of two or more of them are possible.

The coating resin is not especially limited and may be general resin (known thermosetting resin, known thermoplastic resin, etc.). The coating resin is at least one selected from, for example, acryl resin, polyester resin, polycarbonate resin, polyamide resin, urethane resin, vinyl chlorine resin, fluororesin, silicon resin, epoxy resin, melamine resin, phenol resin, butyral resin, and vinyl acetate resin. Sole use of a single one and use of a copolymer or modified product of two or more of them are possible. The coating resin may be resin containing fluorine atoms to lower the refractive index of a coating film.

The polymerizable monomers are not limited specifically as long as they are monomers that are polymerizable (e.g., radical polymerization, anionic polymerization, cationic polymerization, etc.) and may be general monomers. The polymerizable monomers are at least one type selected from, for example, a non-ionic monomer (styrene, methyl methacrylate, 2-hydroxyethyl acrylate, etc.), anionic monomer (methacrylic acid, maleic acid, itaconic acid, 2-acrylamide-2-methylpropanesulfonic acid, o- and p-(styrene sulfonate), and salts thereof, etc.), cationic monomer (N-(3-acrylamide propyl)ammonium methacrylate, N-(2-methacryloyloxyethyl)-N,1,2-dimethyl-5-vinyl pyridinium methosulfate, salts thereof, etc.), and cross-linkable monomer (divinylbenzene, ethylene diacrylate, N,N-methylenebisacrylamide, etc.). Sole use of single one and mixed use of two or more of them are possible. The polymerizable monomers may be monomers containing fluorine atoms to reduce the refractive index of a coating film, for example.

The hydrolyzable organic metal compounds are at least one type selected from alkoxide (silicon, titanium, zirconium, aluminum, etc. expressed by a general formula, R¹ₙMₘ(,OR²)ₘ₋ₙ, wherein R¹ and R² each are a hydrocarbon group, such as an alkyl group, aryl group, vinyl group, acryl group, etc., M is a metal atom, m is a coordination number of an element, and n is 0, 1,2, or 3) or a derivative thereof. Sole use of single one and mixed use of two or more of them are possible. In particular, the hydrolyzable organic metal compounds may be at least one type selected from organic silicon compounds, such as tetramethoxysilane, tetraethoxysilane, tetra(isopropoxy)silane, methyltrimethoxysilane, ethyltrimethoxysilane, ethyltriisopropoxysilane, vinyltrimethoxysilane, etc.

In order to adjust the viscosity and the solid compound, an organic solvent may be added to the composition 300 for forming a low refractive index layer. The organic solvent that can be added thereto can be selected in view of the compatibilities with an organic solvent as a dispersion medium for organosol of the magnesium fluoride particles 100 and with the binder 310. The organic solvent that can be added thereto is at least one selected from, for example, an alcohols solvent, ketones solvent, ethers solvent, esters solvent, halogen based solvent, and hydrocarbon solvent. Sole use of single one and mixed use of two or more of them are possible.

### [Method for Producing Composition for Forming Low Refractive Index Layer]

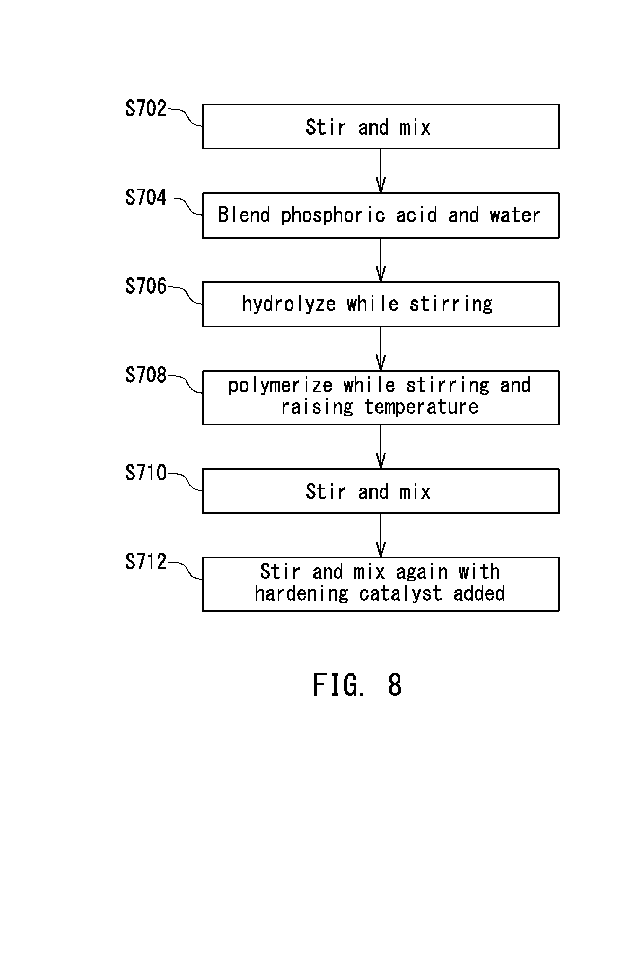

FIG. 8 is a flowchart depicting a method for producing the composition 300 for forming a low refractive index layer according to one embodiment of the present invention. The composition 300 for forming a low refractive index layer can be produced by executing Steps S702-S712.

Step S702: Methyltrimethoxysilane (200 parts by mass), tufluoropropyl-trimethoxysilane (150 parts by mass), and polypropylene glycol monoethyl ether (70 parts by mass) were stirred and mixed with 5 % of the dispersion solution 200 of magnesium fluoride particles including the magnesium fluoride particles 100 (379 parts by mass) and the dispersion medium 210 (7204 parts by mass of isopropyl alcohol) to generate a mixed solution.

Step S704: Phosphoric acid (1 part by mass) and water (150 parts by mass) were blended to the generated mixed solution to generate a blended solution.

Step S706: While being stirred at a temperature of 30°C ± 5°C, the generated blended solution was hydrolyzed for 60 minutes to generate a hydrolyzed solution.

Step S708: Further, the temperature of the hydrolyzed solution was raised to 80°C ± 3°C, and the hydrolyzed solution is stirred for 60 minutes for polymerization to prepare polymers including magnesium fluoride particles 100.

Step S710: The polymer including the magnesium fluoride particles 100 (654 parts by mass) and isopropyl alcohol (390 parts by mass) were mixed together and stirred to generate a stirred mixed solution.

Step S712: Acetoxy aluminum (15 parts by mass) as a hardening catalyst was added to the generated stirred mixed solution, and the stirred mixed solution was stirred and mixed again to prepare the composition 300 for forming a low refractive index layer (low refractive index coating material). A coating film of the composition 300 for forming a low refractive index layer had a refractive index of 1.35.

### [Substrate of Low Refractive Index Layer]

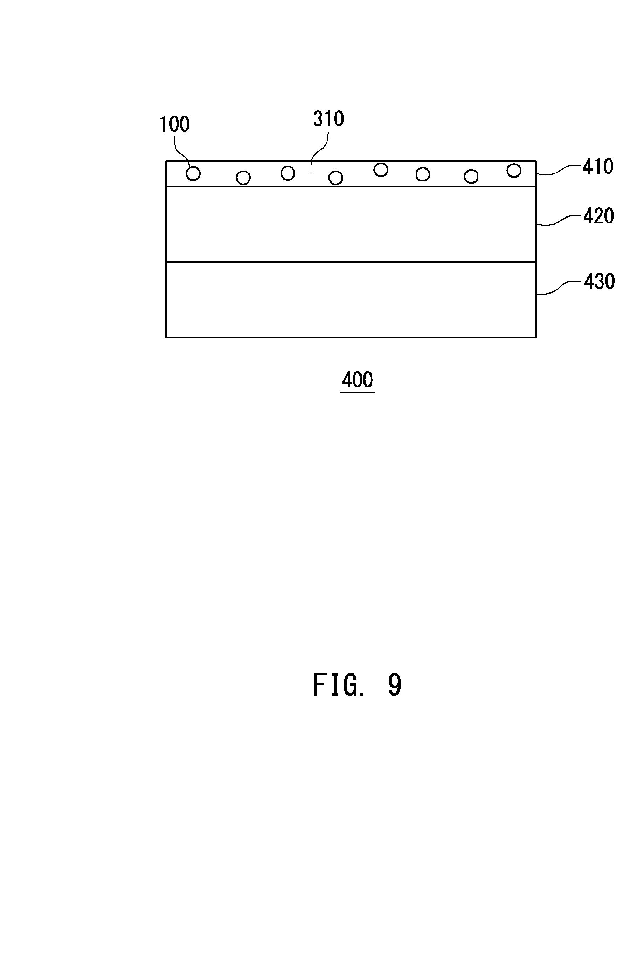

FIG. 9 is a schematic illustration showing a substrate 400 with a low refractive index layer according to one embodiment of the present invention. The substrate 400 with a low refractive index layer includes a low refractive index layer 410, a hard coated layer 420, and a resin substrate 430. The low refractive index layer 410 contains the composition 300 for forming a low refractive index layer. The hard coated layer 420 is formed on the resin substrate 430. The low refractive index layer 410 is formed on the hard coated layer 420.

The low refractive index layer 410 is formed by coating the composition 300 for forming a low refractive index layer (low refractive index coating material) onto the hard coated layer 420. A method for coating the composition 300 for forming a low refractive index layer is not limited specifically. At least one of dipping, spraying, spin coating, and roll coating is employable. When the composition 300 for forming a low refractive index layer is dried after coated, the low refractive index layer 410 can be formed. It is noted that when heating treatment or ultraviolet irradiation treatment is performed according to the types of the binder 310, hardening of the hard coated layer 420 can be promoted.

The content of the magnesium fluoride particles 100 included in the low refractive index layer 410 may be 20 mass% or higher and 90 mass% or lower relative to the total content (100 mass%) of the low refractive index layer 410. When the content of the magnesium fluoride particles 100 as a low refractive index constituent is 90 mass% or lower, decrease in physical and chemical strength of the low refractive index layer 410 can be suppressed, and adhesiveness to the hard coated layer 420 can be ensured, thereby satisfying practicability. Further, when the content of the magnesium fluoride particles 100 is 20 mass% or higher, effect obtained by lowering the refractive index of the low refractive index layer 410 can be maintained, which is practical.

The low refractive index layer 410 has a thickness in the range of 50 nm or larger and 300 nm or smaller, and preferably in the range of 80 nm or larger and 200 nm or smaller. When the low refractive index layer 410 has a thickness of 50 nm or larger, it can be easy to suppress decrease in strength of the low refractive index layer 410 and decrease in the function of antireflection. Further, when the low refractive index layer 410 has a thickness of 300 nm or smaller, the low refractive index layer 410 can be prevented from cracking, and the strength of the low refractive index layer 410 can be prevented from decreasing. In addition, decrease in antireflection function, which is caused due to the low refractive index layer 410 being too thick, can be suppressed.

Although the refractive index of the low refractive index layer 410 depends on the mixing ratio between the magnesium fluoride particles 100 as a low refractive index constituent and the binder 310 as a constituent for forming a low refractive index layer, the refractive index is in the range of preferably 1.28 or higher and 1.50 or lower, more preferably 1.30 or higher and 1.42 or lower, and particularly preferably 1.30 or higher and 1.40 or lower.

When the low refractive index layer 410 has a refractive index of 1.50 or lower, it can be easy to suppress decrease in antireflection function. Further, when refractive index is 1.28 or higher, the low refractive index layer 410 can be comparatively easily obtained.

The hard coated layer 420 includes particles with a high refractive index and a constituent for forming a coated layer to function as a high refractive index layer. The high refractive index particles have a refractive index of 1.6 or higher and are particles formed of, for example, metal, metal oxide, or metal fluoride. The high refractive index particles are at least one type selected from, for example, zinc, titanium, aluminum, cerium, yttrium, niobium, zirconium, antimony, indium, and tin. Sole use of single one and mixed use of two or more of them are possible. Further, the constituent for forming a coated layer may be at least one selected from, for example, acrylic resin of active energy ray-curable type and acrylic resin of thermosetting type. Sole use of single one and mixed use of two or more of them are possible.

The hard coated layer 420 has a thickness (Th) of 300 nm or larger. It is preferable that the ratio (Dp/Th) between the average particle size (Dp) of the high refractive index particles and the thickness (Th) of the hard coated layer 420 falls in the range of 0.2 or larger and 1.0 or smaller. Further, the difference in refractive index between the high refractive index particles and the constituent for forming a coated layer is generally 0.2 or smaller, and preferably 0.1 or smaller.

The resin substrate 430 may be one of, for example, a plastic sheet, plastic film, and plastic panel. Further, a material that forms the resin substrate 430 is at least one selected from, for example, polycarbonate, acrylic resin, PET, and triacetylcellulose (TAC). Sole use of single one and mixed use of two or more of them are possible.

### [Method for Manufacturing Substrate with Low Refractive Index Layer]

The substrate 400 with a low refractive index layer can be manufactured in such a manner that the hard coated layer 420 is stacked onto the resin substrate 430, and the low refractive index layer 410 is stacked onto the hard coated layer 420. A method for stacking the low refractive index layer 410 onto the hard coated layer 420 may be a method for stacking a film formed using the composition 300 for forming a low refractive index layer onto the hard coated layer 420. The stacking method is at least one selected from, for example, a method in which the composition 300 for forming a low refractive index layer is coated onto the hard coated layer 420 by direct stacking onto the hard coated layer 420 and a method in which the low refractive index layer 410 formed on a substrate different from the resin substrate 430 is stacked onto the hard coated layer 420 by transfer.

At least one selected from of general coating methods is employable for the above coating method. The general coating methods includes, for example, reverse coating, gravure coating, rod coating, bar coating, die coating, and spray coating. Sole use of single one and mixed use of two or more of them are possible. It is noted that in forming the low refractive index layer 410, the reverse coating, especially, reverse coating using a gravure roll with a small diameter is preferable in view of coating accuracy.

Moreover, in stacking the low refractive index layer 410 onto the hard coated layer 420, it is preferable that the composition 300 for forming a low refractive index layer is dispersed with a solvent to prepare the coating material, and the coating material is coated onto the hard coated layer 420 and is dried to be hardened. The solvent is blended in order to improve coating or printing workability. Any conventionally known solvent can be used which can dissolve the binder 310.

The solvent is at least one selected from, for example, methanol, ethanol, isopropyl alcohol, n-butanol, tert-butanol, ethylene glycol monomethyl ether, 1-methoxy-2-propanol, propylene glycol monomethyl ether, propylene glycol monoethyl ether, cyclohexanone, butyl acetate, isopropyl acetone, methyl ethyl ketone, methyl isobutyl ketone, diacetylacetonate, and acetylacetonate. Sole use of single one and mixed use of two or more of them are possible. Referring to coating the hard coated layer 420, the same method as that for coating the low refractive index layer 410 is employable.

Although the use amount of the solvent is not specifically limited as far as the amount falls in a suitable range for forming the low refractive index layer 410, it is generally in the range of 10 parts by mass or larger and 10000 parts by mass or smaller relative to 100 parts by mass of the total amount of the magnesium fluoride particles 100 and the binder 310. It is noted that a colorant, such as a dye, pigment, etc. can be added to the solvent.

Description has been made with reference to FIGS. 1-9 about the magnesium fluoride particles 100, the method for producing the magnesium fluoride particles 100, the dispersion solution 200 of magnesium fluoride particles, the method for producing the dispersion solution 200 of magnesium fluoride particles, the composition 300 for forming a low refractive index layer, the method for producing the composition 300 for forming a low refractive index layer, the substrate 400 with a low refractive index layer, and the method for manufacturing the substrate 400 with a low refractive index layer, according to the embodiments of the present invention.

### [Examples]

Examples 1-4 according to some embodiments of the present invention will be described below. In addition, Comparative Examples 1 and 2, to which conventional techniques are applied, will be described for comparison with Examples. The followings are the measurement methods of the average particle size, the refractive index, and the specific surface area of the magnesium fluoride particles formed by executing each of Examples 1-4 and Comparative Examples 1 and 2.

### [Measurement of Average Particle Size]

The average particle size of the magnesium fluoride particles was measured by dynamic light scattering. Specifically, the magnesium fluoride particles and isopropyl alcohol were mixed together to prepare colloid in which magnesium fluoride has a concentration of 5 mass%. Then, the average particle size of the magnesium fluoride particles was measured using a particle size distribution measuring instrument (Microtrac, Nanotrac UPA, UPA-UZ152 manufactured by NIKKISO CO., LTD.). It is noted that the average particle size is a particle size defined where of entire sample particles, 50 volume% of particles have a particle size equal to or smaller than the average particle size (d50).

Measurement principle: dynamic light scattering, frequency analysis (FFT- heterodyne)
Light source: 3 mW, two semiconductor lasers of 780 nm
Set temperature range: 10°C to 80°C
Particle size distribution measuring range: 0.8 nm to 6.5406 µm
Measurement target: colloidal particles

Unless not specifically described, each average particle size of Examples according to the embodiments of the present invention and Comparative Examples means an average particle size in volume conversion measured by the above dynamic light scattering.

### [Measurement of Refractive Index of Particles]

Described below will be the measurement method of the refractive index of the magnesium fluoride particles. Specifically, Steps S202 and S204 are executed.

Step S202: Two to three drops of a standard refractive index liquid (Cargill standard refractive index liquid: Series AA and AAA) with a known refractive index was dripped onto a glass substrate, and the magnesium fluoride particles were mixed with the standard refractive index liquid to prepare a mixed solution.

Step S204: Step S202 was performed on various standard refractive index liquids (n = 1.300 to 1.458, wavelength = 589.3 nm) to prepare plural types of mixed solutions. The refractive index of each standard refractive index liquid contained in the mixed solutions, which have become transparent, was defined as the refractive index of the magnesium fluoride particles.

### [Measurement of Specific Surface Area of Particles]

The specific surface area of the magnesium fluoride particles was measured by nitrogen adsorption (Brunauer, Emmett and Teller method (BET)). Specifically, the specific surface area of the magnesium fluoride particles was measured by BET using a specific surface area measuring instrument (Gemini V manufactured by Shimadzu Corporation and Micromeritics Instrument Corporation). The magnesium fluoride particles (about 1 g) were subjected to drying under reduced pressure and were further subjected to degasification. The outcome was used as a measurement sample. The drying is performed at a temperature of 150°C for about 20 hours.

Examples 1-4 according to the embodiments of the present invention will be described below. Further, description of Comparative Examples 1 and 2, to which conventional techniques are applied, are followed for comparison with the examples.

### [Example 1]

### [Generation of Magnesium Fluorosilicate Particles]

Steps S302-S306 described with reference to FIG. 4 are performed to generate magnesium fluorosilicate particles.

An aqueous solution of H₂SiF₆ (40 %: 897.4 g) was measured and put into a reaction vessel (made of tetrafluoroethylene-perfluoroalkyl vinyl ether copolymer (PFA)). After the temperature of the solution was raised to 80°C by a water bath, MgCO₃ (200 g: Konoshima Chemical. Co., Ltd.) was added to the solution little by little continually for about 30 minutes, while the solution was stirred and kept at a temperature of 80°C, thereby obtaining a reaction solution. Thereafter, the reaction solution was matured for one hour with its temperature kept at 80°C.

The reaction vessel was taken out from the water bath and was left for about two hours. When the temperature of the reaction solution became room temperature (20-23°C), isopropanol (645.2 g: special grade reagent by Wako Pure Chemical Industries, Ltd.) was added and stirred sufficiently to obtain a stirred reaction solution. The stirred reaction solution was subjected to suction filtration through a membrane filter (pore size: 5 µm, manufactured by Millipore Corporation) for about two hours to obtain paste of magnesium fluorosilicate particles (678.2 g) as a residue.

The paste of magnesium fluorosilicate particles was put into a reaction vessel (made of PFA). While highly pure N₂ gas was allowed to flow (flow rate: 5 L/min.) to the reaction vessel (made of PFA), the paste was dried using a dryer at a temperature of 60°C for 50 hours. After the drying, white powder of 484.7 g was obtained. When the white powder was analyzed by X-ray Diffraction (XRD) (RINT-Ultima III manufactured by Rigaku Corporation), it was confirmed that the powder was MgSiF₆·6H₂O. Further, TG measurement of the powder using a thermo-balance (EXSTAR6000 TG/DTA6300 manufactured by Seiko Instruments Inc.) confirmed that the powder was 6H₂O salt. The yield of MgSiF₆·6H₂O was 74 %.

### [Generation of Slurry of Magnesium Fluorosilicate Particulates]

Step S308 described with reference to FIG. 4 is executed to produce slurry of magnesium fluorosilicate particulates.

The white powder (MgSiF₆·6H₂O: 480 g) obtained by executing Step S306 was added to isopropanol (5920 g: special grade reagent by Wako Pure Chemical Industries, Ltd.) and was stirred sufficiently to obtain a solution (7.5 %: 6400 g). The powder was crushed by a bead mill (product manufactured by SHINMARU ENTERPRISES CORPORATION) to reduce the average particle size of the powder to 20 nm or smaller. Powder crushing was performed several times to generate a dispersion solution of MgSiF₆·6H₂O particulates (slurry of magnesium fluorosilicate particulates). The MgSiF₆·6H₂O particulate dispersion solution had a weight of about 6100 g and a concentration of 7.5 %.

### [Generation of Crystalline Magnesium Fluorosilicate]

Step S310 described with reference to FIG. 4 is executed to generate crystalline magnesium fluorosilicate.

Of the MgSiF₆·6H₂O particulate dispersion solution (7.5 %) obtained by executing Step S308, 6000 g of solution was filled into a reaction vessel (made of PFA), and a lid with N₂ gas introduction and discharge ports was fitted to the reaction vessel. While N₂ gas was allowed to flow (flow rate: 2 L/min.) to the reaction vessel (made of PFA), the MgSiF₆·6H₂O particulate dispersion solution was dried using a dryer at a temperature of 80°C for 72 hours. After the drying, about 445 g of white powder (crystalline magnesium fluorosilicate: MgSiF₆·6H₂O) was obtained.

### [Generation of Crystalline Magnesium Fluoride]

Step S312 described with reference to FIG. 4 is executed to generate crystalline magnesium fluoride..

Of the white powder (crystalline magnesium fluorosilicate) obtained by executing Step S310, 430 g of powder was filled into an alumina crucible and was subjected to thermal treatment using an electric furnace under a N₂ gas atmosphere at a temperature of 600°C for three hours. After the thermal treatment, the temperature was reduced to room temperature (20-23°C) under a N₂ gas atmosphere. Then, 79 g of white powder could be taken out from the alumina crucible. Analysis of the obtained powder by XRD (RINT-Ultima III manufactured by Rigaku Corporation) could confirm that the powder was MgF₂ (crystalline magnesium fluoride). The yield of MgF₂ (crystalline magnesium fluoride) that could be thus generated from MgSiF₆·6H₂O was 81 %.

### [Generation of Slurry of Magnesium Fluoride Particulates]

Step S314 described with reference to FIG. 4 is executed to produce slurry of magnesium fluoride particulates.

The white powder (MgF₂: 37.5 g) obtained by executing Step S312 was added to isopropanol (462.5 g: graded reagent by YASHIMA PURE CHEMICALS CO., LTD.) and was stirred sufficiently to obtain a dispersion solution of MgF₂ (7.5 %: 500 g). The MgF₂ dispersion solution was subjected to dispersion treatment by a bead mill (product manufactured by SHINMARU ENTERPRISES CORPORATION) to obtain a dispersion solution. While dispersion treatment was performed using a zirconium bead (manufactured by NIKKATO CORPORATION), the particle size distribution of MgF₂ (magnesium fluoride particulates) in the dispersion solution was measured using a particle size distribution measuring instrument (Microtrac UPA-UZ152 manufactured by NIKKISO CO., LTD.). The dispersion treatment was continued until the average particle size (volume conversion, d50) of MgF₂ became 30 nm or smaller to obtain 358 g of dispersion solution of MgF₂ particulates (slurry of magnesium fluoride particulates: 7.5 %).

### [Production of Magnesium Fluoride Particles 100]

Step S316 described with reference to FIG. 4 is executed to produce the magnesium fluoride particles 100.

The dispersion solution of magnesium fluoride particulates (slurry of magnesium fluoride particulates: about 358 g) obtained by executing Step S314 was subjected to evaporation to dryness at a temperature of 50°C or higher and 110°C or lower and was then subjected to thermal treatment with its temperature kept at 200°C or higher and 400°C or lower to the obtain the magnesium fluoride particles 100 (about 26 g).

### [Production of Dispersion Solution 200 of Magnesium Fluoride Particles]

Step S502 described with reference to FIG. 6 is executed to produce the dispersion solution 200 of magnesium fluoride particles.

The magnesium fluoride particles 100 (powder: 25 g) obtained by executing Step S316 was added to isopropanol (475 g: graded reagent manufactured by YASHIMA PURE CHEMICALS CO., LTD.) and was stirred sufficiently to obtain the dispersion solution 200 of magnesium fluoride particles (5 %: 500 g). The refractive index of the magnesium fluoride particles 100 with respect to light with a wavelength of 550 nm was measured to find that the refractive index was 1.34. In view of the fact that monocrystalline MgF₂ has a refractive index of 1.38 with respect to light with a wavelength of 550 nm, it could be confirmed that the magnesium fluoride particles 100 had the pores 130.

### [Example 2]

### [Generation of Magnesium Fluorosilicate Particles]

Steps S302-S306 described with reference to FIG. 4 are performed to generate magnesium fluorosilicate particles.

An aqueous solution of (NH₄)₂SiF₆ (15 %: 3000 g) was measured and put into a reaction vessel (made of PFA). After the temperature of the solution was raised to 50°C by a water bath, MgCO₃ (200 g: Konoshima Chemical Co., Ltd.) was added little by little continually for about 30 minutes, while the solution was stirred and kept at a temperature of 50°C, thereby obtaining a reaction solution. Thereafter, the reaction solution was matured for one hour with its temperature kept at 50°C.

The reaction vessel was taken out from the water bath and was left for about two hours. When the temperature of the reaction solution became room temperature (20-23°C), the reaction solution was subjected to suction filtration through a membrane filter (pore size: 5 µm, manufactured by Millipore Corporation) for about two hours to obtain paste of magnesium fluorosilicate particles (718.5 g) as residual.

The paste of magnesium fluorosilicate particles was put into a reaction vessel (made of PFA). While highly pure N₂ gas was allowed to flow (flow rate: 5 L/min.) to the reaction vessel (made of PFA), the paste was dried using a dryer at a temperature of 110°C for 50 hours. After the drying, 462.3 g of white powder was obtained. When the white powder was analyzed by X-ray Diffraction (XRD) (RINT-Ultima III manufactured by Rigaku Corporation), it was confirmed that the powder was MgSiF₆·6H₂O. Further, TG measurement of the powder using a thermo-balance (EXSTAR6000 TG/DTA6300 manufactured by Seiko Instruments Inc.) confirmed that the powder was 6H₂O salt. The yield of MgSiF₆·6H₂O was 71%.

### [Generation of Slurry of Magnesium Fluorosilicate Particulates]

Step S308 described with reference to FIG. 4 is executed to produce slurry of magnesium fluorosilicate particulates.

The white powder (MgSiF₆·6H₂O: 460 g) obtained by executing Step S306 was added to isopropanol (6111 g: special grade reagent by Wako Pure Chemical Industries, Ltd.) and was stirred sufficiently to obtain a solution (7%). The powder was crushed by a bead mill (by SHINMARU ENTERPRISES CORPORATION) to reduce the average particle size of the powder to 20 nm or smaller. Powder crushing was performed several times to generate a dispersion solution of MgSiF₆·6H₂O particulates (slurry of magnesium fluorosilicate particulates). The dispersion solution of MgSiF₆·6H₂O particulates had a weight of about 5880 g and a concentration of 7%.

### [Generation of Crystalline Magnesium Fluorosilicate]

Step S310 described with reference to FIG. 4 is executed to generate crystalline magnesium fluorosilicate.

Of the MgSiF₆·6H₂O particulate dispersion solution (7 %) obtained by executing Step S308, 5400 g of solution was filled into a reaction vessel (made of PFA), and a lid with N₂ gas introduction and discharge ports was fitted to the reaction vessel. While N₂ gas was allowed to flow (flow rate: 2 L/min.) to the reaction vessel (made of PFA), the MgSiF₆·6H₂O particulate dispersion solution was dried using a dryer at a temperature of 80°C for 72 hours. After the drying, about 371 g of white powder (crystalline magnesium fluorosilicate: MgSiF₆·6H₂O) was obtained.

### [Generation of Crystalline Magnesium Fluoride]

Step S312 described with reference to FIG. 4 is executed to generate crystalline magnesium fluoride.

Of the white powder (crystalline magnesium fluorosilicate) obtained by executing Step S310, 370 g of powder was filled into an alumina crucible and was subjected to thermal treatment using an electric furnace under a N₂ gas atmosphere at a temperature of 400°C for eight hours. After the thermal treatment, the temperature was reduced to room temperature (20-23°C) under a N₂ gas atmosphere. Then, 71.8 g of white powder could be taken out from the alumina crucible. Analysis of the obtained powder by XRD (RINT-Ultima III manufactured by Rigaku Corporation) could confirm that the powder was MgF₂ (crystalline magnesium fluoride). The yield of MgF₂ (crystalline magnesium fluoride) that could be thus generated from MgSiF₆·6H₂O was 86%.

### [Generation of Slurry of Magnesium Fluoride Particulates]

Step S314 described with reference to FIG. 4 is executed to produce slurry of magnesium fluoride particulates.

The white powder (Mg₂F: 30 g) obtained by executing Step S312 was added to isopropanol (470 g: graded reagent by YASHIMA PURE CHEMICALS CO., LTD.) and was stirred sufficiently to obtain a dispersion solution of MgF₂ (6 %: 500 g). The dispersion solution of MgF₂ was subjected to dispersion treatment by a bead mill (by SHINMARU ENTERPRISES CORPORATION) to obtain a dispersion solution. While dispersion treatment was performed using a zirconium bead (by NIKKATO CORPORATION), the particle size distribution of MgF₂ (magnesium fluoride particulates) in the dispersion solution was measured using a particle size distribution measuring instrument (Microtrac UPA-UZ152 by NIKKISO CO., LTD.). The dispersion treatment was continued until the average particle size (volume conversion, d50) of MgF₂ became 30 nm or smaller to obtain 375 g of dispersion solution of MgF₂ particulates (slurry of magnesium fluoride particulates: 6 %).

### [Production of Magnesium Fluoride Particles 100]

Step S316 described with reference to FIG. 4 is executed to produce the magnesium fluoride particles 100.

The dispersion solution of magnesium fluoride particulates (slurry of magnesium fluoride particulates: 370 g) obtained by executing Step S314 was subjected to evaporation to dryness at a temperature of 50°C or higher and 110°C or lower and was then subjected to thermal treatment with its temperature kept at 200°C or higher and 400°C or lower to obtain the magnesium fluoride particles 100 (about 21 g).

### [Production of Dispersion Solution 200 of Magnesium Fluoride Particles]

Step S502 described with reference to FIG. 6 is executed to produce the dispersion solution 200 of magnesium fluoride particles.

The magnesium fluoride particles 100 (powder: 20 g) obtained by executing Step S316 was added to isopropanol (380 g: graded reagent manufactured by YASHIMA PURE CHEMICALS CO., LTD.) and was stirred sufficiently to obtain the dispersion solution 200 of magnesium fluoride particles (5 %: 400 g). The refractive index of the magnesium fluoride particles 100 with respect to light with a wavelength of 550 nm was measured to find that the refractive index was 1.34. In view of the fact that monocrystalline MgF₂ has a refractive index of 1.38 with respect to light with a wavelength of 550 nm, it could be confirmed that the magnesium fluoride particles 100 had the pores 130.

### [Example 3]

### [Generation of Magnesium Fluorosilicate Particles]

Steps S302-S306 described with reference to FIG. 4 are executed to generate magnesium fluorosilicate particles.

An aqueous solution of H₂SiF₆ (40 %: 720.5 g) was measured and put into a reaction vessel (made of PFA). After the temperature of the solution was raised to 80°C by a water bath, MgCl₂·6H₂O (205 g: by KANTO CHEMICAL CO., INC.) was added to the solution little by little continually for about 30 minutes, while the solution was stirred and kept at a temperature of 80°C, thereby obtaining a reaction solution. Thereafter, the reaction solution was matured for one hour with its temperature kept at 80°C.

The reaction vessel was taken out from the water bath and was left for about two hours. When the temperature of the reaction solution became room temperature (20-23°C), isopropanol (925 g: special grade reagent by Wako Pure Chemical Industries, Ltd.) was added and stirred sufficiently to obtain a stirred reaction solution. The stirred reaction solution was subjected to suction filtration through a membrane filter (pore size: 5 µm, manufactured by Millipore Corporation) for about two hours to obtain paste of magnesium fluorosilicate particles (678.2 g) as a residue.

The paste of magnesium fluorosilicate particles was put into a reaction vessel (made of PFA). While highly pure N₂ gas was allowed to flow (flow rate: 5 L/min.) to the reaction vessel (made of PFA), the paste was dried using a dryer at a temperature of 60°C for 96 hours. After the drying, 210 g of white powder was obtained. When the white powder was analyzed by X-ray Diffraction (XRD) (RINT-Ultima III manufactured by Rigaku Corporation), it was confirmed that the powder was MgSiF₆·6H₂O. Further, TG measurement of the powder using a thermo-balance (EXSTAR6000 TG/DTA6300 manufactured by Seiko Instruments Inc.) confirmed that the powder was 6H₂O salt. The yield of MgSiF₆·6H₂O was 76.5 %.

### [Generation of Slurry of Magnesium Fluorosilicate Particulates]

Step S308 described with reference to FIG. 4 is executed to produce slurry of magnesium fluorosilicate particulates.

The white powder (MgSiF₆·6H₂O: 200 g) obtained by executing Step S306 was added to isopropanol (3133 g: special grade reagent by Wako Pure Chemical Industries, Ltd.) and was stirred sufficiently to obtain a solution (about 6 %). The powder was crushed by a bead mill (product manufactured by SHINMARU ENTERPRISES CORPORATION) to reduce the average particle size of the powder to 20 nm or smaller. Powder crushing was performed several times to generate a dispersion solution of MgSiF₆·6H₂O particulates (slurry of magnesium fluorosilicate particulates). The MgSiF₆·6H₂O particulate dispersion solution had a weight of about 3100 g and a concentration of about 6 %.

### [Generation of Crystalline Magnesium Fluorosilicate]

Step S310 described with reference to FIG. 4 is executed to generate crystalline magnesium fluorosilicate.

Of the MgSiF₆·6H₂O particulate dispersion solution (about 6 %) obtained by executing Step S308, 3050 g of solution was filled into a reaction vessel (made of PFA), and a lid with N₂ gas introduction and discharge ports was fitted to the reaction vessel. While N₂ gas was allowed to flow (flow rate: 2 L/min.) to the reaction vessel (made of PFA), the MgSiF₆·6H₂O particulate dispersion solution was dried using a dryer at a temperature of 80°C for 48 hours. After the drying, about 181 g of white powder (crystalline magnesium fluorosilicate: MgSiF₆·6H₂O) was obtained.

### [Generation of Crystalline Magnesium Fluoride]

Step S312 described with reference to FIG. 4 is executed to generate crystalline magnesium fluoride..

Of the white powder (crystalline magnesium fluorosilicate) obtained by executing Step S310, 180 g of powder was filled into an alumina crucible and was subjected to thermal treatment using an electric furnace under a N₂ gas atmosphere at a temperature of 600°C for three hours. After the thermal treatment, the temperature was reduced to room temperature (20-23°C) under a N₂ gas atmosphere. Then, 34 g of white powder could be taken out from the alumina crucible. Analysis of the obtained powder by XRD (RINT-Ultima III manufactured by Rigaku Corporation) could confirm that the powder was MgF₂ (crystalline magnesium fluoride). The yield of MgF₂ (crystalline magnesium fluoride) that could be thus generated from MgSiF₆·6H₂O was 83%.

### [Generation of Slurry of Magnesium Fluoride Particulates]

Step S314 described with reference to FIG. 4 is executed to produce slurry of magnesium fluoride particulates.

The white powder (MgF₂: 30 g) obtained by executing Step S312 was added to isopropanol (470 g: graded reagent by YASHIMA PURE CHEMICALS CO., LTD.) and was stirred sufficiently to obtain a dispersion solution of MgF₂ (6 %: 500 g). The MgF₂ dispersion solution was subjected to dispersion treatment by a bead mill (product manufactured by SHINMARU ENTERPRISES CORPORATION) to obtain a dispersion solution. While dispersion treatment was performed using a zirconium bead (manufactured by NIKKATO CORPORATION), the particle size distribution of MgF₂ (magnesium fluoride particulates) in the dispersion solution was measured using a particle size distribution measuring instrument (Microtrac UPA-UZ152 manufactured by NIKKISO CO., LTD.). The dispersion treatment was continued until the average particle size (volume conversion, d50) of MgF₂ became 30 nm or smaller to obtain 364 g of dispersion solution of MgF₂ particulates (slurry of magnesium fluoride particulates: 6%).

### [Production of Magnesium Fluoride Particles 100]

Step S316 described with reference to FIG. 4 is executed to produce the magnesium fluoride particles 100.

The dispersion solution of magnesium fluoride particulates (slurry of magnesium fluoride particulates: about 364 g) obtained by executing Step S314 was subjected to evaporation to dryness at a temperature of 50°C or higher and 110°C or lower and was then subjected to thermal treatment with its temperature kept at 200°C or higher and 400°C or lower to the obtain the magnesium fluoride particles 100 (about 21 g).

### [Production of Dispersion Solution 200 of Magnesium Fluoride Particles]

Step S502 described with reference to FIG. 6 is executed to produce the dispersion solution 200 of magnesium fluoride particles.

The magnesium fluoride particles 100 (powder: 20 g) obtained by executing Step S316 was added to isopropanol (380 g: graded reagent manufactured by YASHIMA PURE CHEMICALS CO., LTD.) and was stirred sufficiently to obtain the dispersion solution 200 of magnesium fluoride particles (5 %: 400 g). The refractive index of the magnesium fluoride particles 100 with respect to light with a wavelength of 550 nm was measured to find that the refractive index was 1.35. In view of the fact that monocrystalline MgF₂ has a refractive index of 1.38 with respect to light with a wavelength of 550 nm, it could be confirmed that the magnesium fluoride particles 100 had the pores 130.

### [Example 4]

### [Generation of Magnesium Fluorosilicate Particles]

Steps S302-S306 described with reference to FIG. 4 are performed to generate magnesium fluorosilicate particles.

An aqueous solution of H₂SiF₆ (40 %: 1000 g) was measured and put into a reaction vessel (made of PFA). After the temperature of the solution was raised to 80°C by a water bath, Mg(OH)₂ (150 g: by KANTO CHEMICAL CO., INC.) was added to the solution little by little continually for about 30 minutes, while the solution was stirred and kept at a temperature of 80°C, thereby obtaining a reaction solution. Thereafter, the reaction solution was matured for one hour with its temperature kept at 80°C.

The reaction vessel was taken out from the water bath and was left for about two hours. When the temperature of the reaction solution became room temperature (20-23°C), isopropanol (950 g: special grade reagent by Wako Pure Chemical Industries, Ltd.) was added and stirred sufficiently to obtain a stirred reaction solution. The stirred reaction solution was subjected to suction filtration through a membrane filter (pore size: 5 µm, manufactured by Millipore Corporation) for about two hours to obtain paste of magnesium fluorosilicate particles as a residue.

The paste of magnesium fluorosilicate particles was put into a reaction vessel (made of PFA). While highly pure N₂ gas was allowed to flow (flow rate: 5 L/min.) to the reaction vessel (made of PFA), the paste was dried using a dryer at a temperature of 70°C for 96 hours. After the drying, 515 g of white powder was obtained. When the white powder was analyzed by X-ray Diffraction (XRD) (RINT-Ultima III manufactured by Rigaku Corporation), it was confirmed that the powder was MgSiF₆·6H₂O. Further, TG measurement of the powder using a thermo-balance (EXSTAR6000 TG/DTA6300 manufactured by Seiko Instruments Inc.) confirmed that the powder was 6H₂O salt. The yield of MgSiF₆·6H₂O was 73 %.

### [Generation of Slurry of Magnesium Fluorosilicate Particulates]

Step S308 described with reference to FIG. 4 is executed to generate slurry of magnesium fluorosilicate particulates.

The white powder (MgSiF₆·6H₂O: 300 g) obtained by executing Step S306 was added to isopropanol (4315 g: special grade reagent by Wako Pure Chemical Industries, Ltd.) and was stirred sufficiently to obtain a solution (about 6.5 %). The powder was crushed by a bead mill (product manufactured by SHINMARU ENTERPRISES CORPORATION) to reduce the average particle size of the powder to 20 nm or smaller. Powder crushing was performed several times to generate a dispersion solution of MgSiF₆·6H₂O particulates (slurry of magnesium fluorosilicate particulates). The MgSiF₆·6H₂O particulate dispersion solution had a weight of about 4200 g and a concentration of about 6.5 %.

Step S310 described with reference to FIG. 4 is executed to generate crystalline magnesium fluorosilicate.

Of the MgSiF₆·6H₂O particulate dispersion solution (about 6.5 %) obtained by executing Step S308, 4000 g of solution was filled into a reaction vessel (made of PFA), and a lid with N₂ gas introduction and discharge ports was fitted to the reaction vessel. While N₂ gas was allowed to flow (flow rate: 2 L/min.) to the reaction vessel (made of PFA), the MgSiF₆·6H₂O particulate dispersion solution was dried using a dryer at a temperature of 80°C for 48 hours. After the drying, about 255 g of white powder (crystalline magnesium fluorosilicate: MgSiF₆·6H₂O) was obtained.

### [Generation of Crystalline Magnesium Fluoride]

Step S312 described with reference to FIG. 4 is executed to generate crystalline magnesium fluoride.

Of the white powder (crystalline magnesium fluorosilicate) obtained by executing Step S310, 250 g of powder was filled into an alumina crucible and was subjected to thermal treatment using an electric furnace under a N₂ gas atmosphere at a temperature of 600°C for three hours. After the thermal treatment, the temperature was reduced to room temperature (20-23°C) under a N₂ gas atmosphere. Then, 48.2 g of white powder could be taken out from the alumina crucible. Analysis of the obtained powder by XRD (RINT-Ultima III manufactured by Rigaku Corporation) could confirm that the powder was MgF₂ (crystalline magnesium fluoride). The yield of MgF₂ (crystalline magnesium fluoride) that could be thus generated from MgSiF₆·6H₂O was 85%.

### [Generation of Slurry of Magnesium Fluoride Particulates]

Step S314 described with reference to FIG. 4 is executed to generate slurry of magnesium fluoride particulates.

The white powder (MgF₂: 35 g) obtained by executing Step S312 was added to isopropanol (465 g: graded reagent by YASHIMA PURE CHEMICALS CO., LTD.) and was stirred sufficiently to obtain a dispersion solution of MgF₂ (7 %: 500 g). The MgF₂ dispersion solution was subjected to dispersion treatment by a bead mill (product manufactured by SHINMARU ENTERPRISES CORPORATION) to obtain a dispersion solution. While dispersion treatment was performed using a zirconium bead (manufactured by NIKKATO CORPORATION), the particle size distribution of MgF₂ (magnesium fluoride particulates) in the dispersion solution was measured using a particle size distribution measuring instrument (Microtrac UPA-UZ152 manufactured by NIKKISO CO., LTD.). The dispersion treatment was continued until the average particle size (volume conversion, d50) of MgF₂ became 30 nm or smaller to obtain 372 g of dispersion solution of MgF₂ particulates (slurry of magnesium fluoride particulates: 7%).

### [Production of Magnesium Fluoride Particles 100]

Step S316 described with reference to FIG. 4 is executed to produce the magnesium fluoride particles 100.

The dispersion solution of magnesium fluoride particulates (slurry of magnesium fluoride particulates: about 372 g) obtained by executing Step S314 was subjected to evaporation to dryness at a temperature of 50°C or higher and 110°C or lower and was then subjected to thermal treatment with its temperature kept at 200°C or higher and 400°C or lower to the obtain the magnesium fluoride particles 100 (about 25 g).

### [Production of Dispersion Solution 200 of Magnesium Fluoride Particles]

Step S502 described with reference to FIG. 6 is executed to produce the dispersion solution 200 of magnesium fluoride particles.

The magnesium fluoride particles 100 (powder: 20 g) obtained by executing Step S316 was added to isopropanol (380 g: graded reagent manufactured by YASHIMA PURE CHEMICALS CO., LTD.) and was stirred sufficiently to obtain the dispersion solution 200 of magnesium fluoride particles (5 %: 400 g). The refractive index of the magnesium fluoride particles 100 with respect to light with a wavelength of 550 nm was measured to find that the refractive index was 1.34. In view of the fact that monocrystalline MgF₂ has a refractive index of 1.38 with respect to light with a wavelength of 550 nm, it could be confirmed that the magnesium fluoride particles 100 had the pores 130.

### [COMPARATIVE EXAMPLE 1]

### [Production of MgF₂]

Ultrapure water (780 g) was measured and put into a reaction vessel (made of PFA). While the water was stirred using a magnetic stirrer as a stirring bar, an aqueous solution of HF (50 %: 200 g) was added to obtain a reaction solution. While the reaction solution was isothermally kept at a temperature of 50°C with a water bath and was stirred, MgCO₃ (200 g, manufactured by Konoshima Chemical Co., Ltd.) was added thereto little by little continually for about 30 minutes to obtain a reaction solution. Thereafter, the reaction solution was matured for one hour with its temperature kept at 80°C. The reaction may proceed swiftly to cause the reaction solution to be in a gel state in the middle of the reaction. This may stop stirring.

When the reaction vessel was taken out from the water bath and was left for about two hours to allow the reaction solution to be at room temperature (20-23°C), isopropanol (1000 g: special grade reagent manufactured by Wako Pure Chemical Industries, Ltd.) was added thereto and was stirred sufficiently. Then, the reaction solution was put into a reaction vessel (made of PFA). While highly pure N₂ gas was allowed to flow (flow rate is 5L/min.) to the reaction vessel (made of PFA), the reaction solution was dried using a dryer at a temperature of 110°C for 96 hours. After the drying, about 137 g of white powder was obtained.

The obtained white powder (about 137 g) was filled into an alumina crucible and was subjected to thermal treatment using an electric furnace under an N₂ gas atmosphere. The treatment was performed at a temperature of 600°C for three hours. After the thermal treatment, the temperature of the white powder was reduced to room temperature (20-23°C) under an N₂ gas atmosphere, 134.8 g of white powder could be taken out from the alumina crucible. The white powder was analyzed by XRD (RINT-Ultima III manufactured by Rigaku Corporation) to confirm that the powder was MgF₂. The yield of MgF₂ that could be produced from MgCO₃ (200 g) was about 91 %.

### [Production of Dispersion Solution of MgF₂ Particulates]

The obtained white powder (MgF₂: 42 g) was added to isopropanol (558 g: graded reagent manufactured by YASHIMA PURE CHEMICALS CO., LTD.) and was stirred sufficiently to obtain a dispersion solution of MgF₂ (7 %: 600 g). The MgF₂ dispersion solution was dispersed with a bead mill (product by SHINMARU ENTERPRISES CORPORATION) to obtain a dispersion solution. During dispersion using a zirconium bead (manufactured by NIKKATO CORPORATION), the particle size distribution of MgF₂ in the dispersion solution was measured using a particle size distribution measuring instrument (Microtrac UPA-UZ152 manufactured by NIKKISO CO., LTD.). After dispersion was performed until the average particle size (converted to volume, d50) of MgF₂ became 30 nm or smaller, 478 g of dispersion solution of MgF₂ particulates (7 %) was obtained.

### [Production of Powder of MgF₂ Particulates]

The obtained dispersion solution of MgF₂ particulates (about 478 g) was subjected to evaporation to dryness at a temperature of 50°C or higher and 110°C or lower and then was kept at a temperature of 200°C or higher and 400°C or lower for thermal treatment to obtain MgF₂ particulates (about 26 g).

### [Production of Dispersion Solution of MgF₂ Particulates]

The obtained MgF₂ particulates (about 26 g) was added to isopropanol (400 g: graded reagent manufactured by YASHIMA PURE CHEMICALS CO., LTD.) and was stirred sufficiently to obtain the dispersion solution 200 of MgF₂ particulates (7 %: 430 g). The refractive index of the MgF₂ particulates with respect to light with a wavelength of 550 nm was measured to find that the refractive index was 1.38, which is equal to that of monocrystalline MgF₂.

### [COMPRATIVE EXAMPLE 2]

### [Production of MgF₂]

Ultrapure water (755 g) was measured and put into a reaction vessel (made of PFA). While the water was stirred using a magnetic stirrer as a stirring bar, an aqueous solution of HF (50 %: 90 g) was added to obtain a reaction solution. While the reaction solution was isothermally kept at a temperature of 50°C with a water bath and was stirred, MgCl₂·6H₂O (200 g, manufactured by KANTO CHEMICAL CO., INC.) was added thereto little by little continually for about 30 minutes to obtain a reaction solution. Thereafter, the reaction solution was matured for one hour with its temperature kept at 80°C. The reaction may proceed swiftly to cause the reaction solution to be in a gel state in the middle of the reaction. This may stop stirring.

When the reaction vessel was taken out from the water bath and was left for about two hours to allow the reaction solution to be at room temperature (20-23°C), isopropanol (1000 g: special grade reagent manufactured by Wako Pure Chemical Industries, Ltd.) was added thereto and was stirred sufficiently. Then, the reaction solution was put into a reaction vessel (made of PFA). While highly pure N₂ gas was allowed to flow (flow rate is 2L/min.) to the reaction vessel (made of PFA), the reaction solution was dried using a dryer at a temperature of 110°C for 96 hours. After the drying, about 58 g of white powder was obtained.

The obtained white powder (about 58 g) was filled into an alumina crucible and was subjected to thermal treatment using an electric furnace under an N₂ gas atmosphere. The treatment was performed at a temperature of 600°C for three hours. After the thermal treatment, the temperature of the white powder was reduced to room temperature (20-23°C) under an N₂ gas atmosphere, 55.1 g of white powder could be taken out from the alumina crucible. The white powder was analyzed by XRD (RINT-Ultima III manufactured by Rigaku Corporation) to confirm that the powder was MgF₂. The yield of MgF₂ that could be produced from MgCl₂·6H₂O (200 g) was about 90 %.

### [Production of Dispersion Solution of MgF₂ Particulates]

The obtained white powder (MgF₂: 35 g) was added to isopropanol (465 g: graded reagent manufactured by YASHIMA PURE CHEMICALS CO., LTD.) and was stirred sufficiently to obtain a dispersion solution of MgF₂ (7 %: 500 g). The MgF₂ dispersion solution was dispersed with a bead mill (product by SHINMARU ENTERPRISES CORPORATION) to obtain a dispersion solution. During dispersion using a zirconium bead (manufactured by NIKKATO CORPORATION), the particle size distribution of MgF₂ in the dispersion solution was measured using a particle size distribution measuring instrument (Microtrac UPA-UZ152 manufactured by NIKKISO CO., LTD.). After dispersion was performed until the average particle size (converted to volume, d50) of MgF₂ became 30 nm or smaller, 370 g of dispersion solution of MgF₂ particulates (7 %) was obtained.

### [Production of Powder of MgF₂ Particulates]

The obtained dispersion solution of MgF₂ particulates (about 370 g) was subjected to evaporation to dryness at a temperature of 50°C or higher and 110°C or lower and then was kept at a temperature of 200°C or higher and 400°C or lower for thermal treatment to obtain MgF₂ particulates (about 22 g).

### [Production of Dispersion Solution of MgF₂ Particulates]

The obtained MgF₂ particulates (about 20 g) was added to isopropanol (315 g: graded reagent manufactured by YASHIMA PURE CHEMICALS CO., LTD.) and was stirred sufficiently to obtain the dispersion solution 200 of MgF₂ particulates (6 %: 335 g). The refractive index of the MgF₂ particulates with respect to light with a wavelength of 550 nm was measured to find that the refractive index was 1.38, which is equal to that of monocrystalline MgF₂.

As described above, execution of Examples 1-4 produced the magnesium fluoride particles 100 and the dispersion solution 200 of magnesium fluoride particles. Further, execution of Comparative Examples 1 and 2 produced MgF₂ particulates and MgF₂ particulate dispersion solutions.

### [EXAMPLES: Manufacture of Substrate with Low Refractive Index Layer]

Description will be made below about examples of manufacture of substrates 400 with a low refractive index layer that include the magnesium fluoride particles 100 produced by executing Examples 1-4 and substrates with a low refractive index layer that include MgF₂ particulates produced by executing Comparative Examples 1 and 2.

First, a PET substrate (PET film) on which a hard coated layer is stacked is prepared. Actually, to one side surface, which serves as an adhesion face, of an optical highly adhesive polyester film (Lumirror (registered trademark) U34 manufactured by Toray Industries, Inc.: with a thickness of 100 µm), a coating material (TYS63 manufactured by TOYOCHEM CO., LTD.: a coating film with a refractive index of 1.63 and a solid concentration of 40 mass%) including antimony peroxide particulates (27 mass%) and urethane acrylate was applied with a bar coater. After drying at a temperature of 90°C, an ultraviolet ray (400 mJ/cm²) was irradiated to harden the coating material, thereby forming a hard coated layer.

Next, a low refractive index layer is stacked on the hard coated layer on the PET substrate (PET film) to manufacturer a substrate with a low refractive index layer (anti-reflection film). Actually, a coating material prepared by adding to a low refractive index coating material (100 parts solid content) three parts of polyester modified hydroxyl-containing poly(dimethylsiloxane) (BYK370 manufactured by BYK Japan KK) was coated on the hard coated layer with a bar coater. After the coating material coated on the hard coated layer and was dried at a temperature of 130°C, a ultraviolet ray of 400nJ/cm² was irradiated for hardening, so that the low refractive index layer having a thickness of about 100 nm was stacked on the hard coated layer.

Execution of the examples for manufacture of a substrate with a low refractive index layer resulted in manufacture of substrates (antireflection films) with a low refractive index layer in which a hard coated layer and a low refractive index layer are stacked on a PET film. Followings are measurement methods of the refractive index, haze, total light transmittance, and minimum reflectance performed on the low refractive index layers that include the magnesium fluoride particles 100 and the low refractive index layers that include MgF₂ particulates and an abrasion resistance evaluation method performed on the low refractive index layers.

### [Measurement of Refractive Index of Low Refractive Index Layer]

Polyester modified hydroxyl-containing poly(dimethylsiloxane) was added to each composition for forming a low refractive index layer to prepare a coating material. The prepared coating material was coated on a polished mirror surface of a silicon wafer by a spin coater and was dried at a temperature of 130°C for hardening. The refractive index of each hardened low refractive index layer was measured at a temperature of 23°C using a spectroscopic ellipsometer (UVISEL M200-FUV-AGMS manufactured by HORIBA JOBIN YVON S.A.S.).

### [Measurement of Haze, Total Light Transmittance, and Minimum Reflectance]

The haze, total light transmittance, and minimum reflectance of each low refractive index layer were measured in accordance with JIS K 7136 using a ultraviolet-visible-near-infrared spectrophotometer (V670 manufactured by JASCO Corporation).

Haze is a ratio of diffused transmitted light to total transmitted light when visible light is irradiated to a film. It can be said that the smaller the haze, the more excellent transparency the film has. It is preferable that the haze is 1.5 % or lower and the total light transmittance is 90 % or higher. Referring to the minimum reflectance, each absolute reflectance spectrum in the wavelength range of 300 nm to 800 nm at an incident angle of 5 degrees was measured, and each reflectance at wavelengths of 400 nm and 700 nm and each minimum reflectance in the wavelength range between 400 nm and 700 nm were measured. It is noted that where a measured reflectance spectrum has wavinesses, each reflectance at wavelengths of 400 nm and 700 nm and the minimum reflectance in the wavelength range between 400 nm and 700 nm were obtained on the basis of a curve formed by connecting the midpoints of peaks (maximum points) and troughs (minimum points) of the wavinesses. The lower the minimum reflectance, the more excellent and favorable antireflection the low refractive index layer can exhibit. The minimum reflectance is preferably 1.0 % or lower.

### [Abrasion Resistance]

Steel wool (SW) hardness evaluation was performed for abrasion resistance of each low refractive index layer. The antireflection face of the low refractive index layer was rubbed ten times by Steel wool (#0000) in a reciprocating manner at a stroke of 10 cm at a speed of 30 mm/sec with a load of 250 g applied. The resultant surface was visually observed to evaluate abrasion in three levels (A: 0 to 10 scratch lines, B: 11 to 20 scratch lines, and C: over 20 scratch liens).

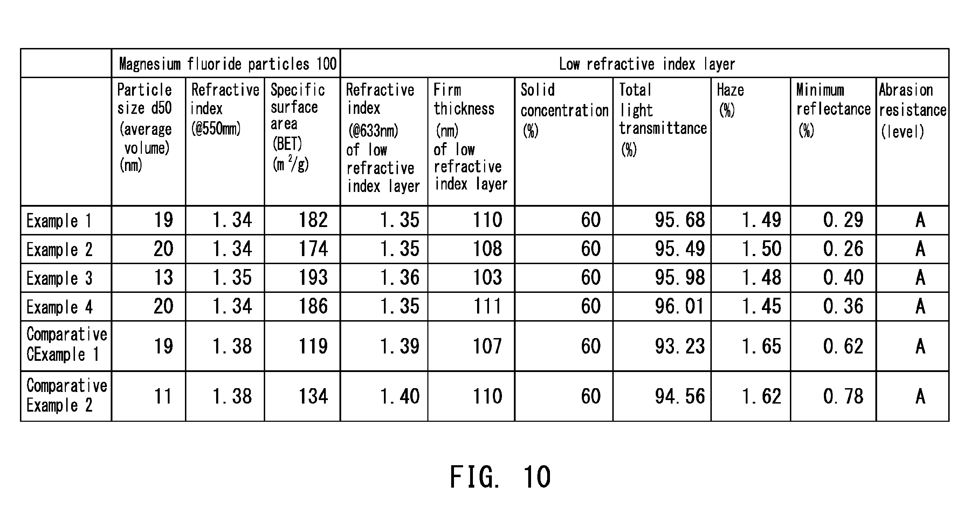

FIG. 10 is a table indicating measurement results of the magnesium fluoride particles, the low refractive index layers, and the substrates with a low refractive index layer, which are produced or manufactured by executing Examples and Comparative Examples.

The refractive indices of the magnesium fluoride particles were 1.38 in Comparative Examples 1 and 2 by conventional techniques and 1.34 to 1.35 in Examples 1-4 according to the present invention. Thus, the magnesium fluoride particles according to Examples of the present invention had refractive indices lower than the magnesium fluoride particles by the conventional techniques.

The magnesium fluoride particles according to Comparative Examples 1 and 2 by the conventional techniques had specific surface areas of 119 m²/g to 134 m²/g. By contrast, the magnesium fluoride particles according to Examples 1-4 of the present invention had specific surface areas of 174 m²/g to 193 m²/g. Thus, the magnesium fluoride particles according to Examples of the present invention had specific surface areas larger than the magnesium fluoride particles according to the conventional techniques.

The low refractive index layers according to Comparative Examples 1 and 2 by the conventional techniques had refractive indices of 1.39 to 1.40. By contrast, the low refractive index layers according to Examples 1-4 of the present invention had refractive indices of 1.35 to 1.36. Thus, the low refractive index layers according to the present invention had refractive indices lower than the low refractive index layers according to the conventional techniques.

The low refractive index layers according to Comparative Examples 1 and 2 by the conventional techniques had total light transmittances of 93.23 % to 94.56 %. By contrast, the low refractive index layers according to Examples 1-4 of the present invention had total light transmittances of 95.49 % to 96.01 %. Thus, the low refractive index layers according to Examples of the present invention had total light transmittances higher than the low refractive index layers according to the conventional techniques.

The low refractive index layers according to Comparative Examples 1 and 2 by the conventional techniques had hazes of 1.62 % to 1.65 %. By contrast, the low refractive index layers according to Examples 1-4 of the present invention had hazes of 1.45 % to 1.50 %. Thus, the low refractive index layers according to Examples of the present invention had hazes smaller than the low refractive index layers according to the conventional techniques.

The low refractive index layers according to Comparative Examples 1 and 2 by the conventional techniques had minimum reflectances of 0.62 % to% 0.78 %. By contrast, the low refractive index layers according to Examples 1-4 of the present invention had minimum reflectances of 0.26 % to 0.40 %. Thus, the low refractive index layers according to Examples of the present invention had minimum reflectances lower than the low refractive index layers according to the conventional techniques.

Referring to the abrasion resistance, the low refractive index layers according to Comparative Examples 1 and 2 by the conventional techniques were evaluated as A. Similarly, the low refractive index layers according to Examples 1-4 of the present invention were evaluated as A. Thus, the results of the abrasion resistance evaluation performed on the low refractive index layers according to Examples of the present invention were equivalent to those on the low refractive index layers by the conventional techniques.

### [INDUSTRIAL APPLICABILITY]

According to the present invention, external light reflection on the surface of a display can be prevented, for example. Thus, the present invention can be utilized in flat panel displays, such as liquid crystal displays (LCDs) and plasma display panels (PDPs).

### [REFEFRENCE SIGNS LIST]

- A: reaction vessel
- 100: magnesium fluoride particle
- 110: particulate
- 120: projections and recesses
- 130: pores
- 130a: intra-particulate open pore
- 130b: intra-particulate closed pore
- 130c: grain boundary void-like open pore
- 130d: grain boundary void-like closed pore
- 200: dispersion solution of magnesium fluoride particles
- 210: dispersion medium
- 300: composition for forming low refractive index layer
- 310: binder
- 400: substrate with low refractive index layer
- 410: low refractive index layer
- 420: hard coated layer
- 430: resin substrate

## Claims

1. Magnesium fluoride particles each comprising:
at least one magnesium fluoride particulate,
wherein the at least one magnesium fluoride particulate each has pores that support a supported substance.

2. The magnesium fluoride particles of claim 1, wherein
the at least one magnesium fluoride particulate includes a plurality of particulates, and
a grain boundary void-like pore serving as a gap that supports the supported substance is present between particulates adjacent to each other of the plurality of particulates.

3. The magnesium fluoride particles of claim 1 or 2, wherein
the pores support the supported substance, and
the supported substance is a material used in a process of generating the at least one magnesium fluoride particulate.

4. The magnesium fluoride particles of claim 1 or 2, wherein
the pores support the supported substance, and
the supported substance has a refractive index lower than the at least one magnesium fluoride particulate.

5. The magnesium fluoride particles of any one of claims 1-4, wherein
the supported substance is at least one of a gas containing an inert gas and a liquid containing an organic solution.

6. The magnesium fluoride particles of any one of claims 1-5, wherein
the pores each are at least one of an intra-particulate open pore present in a state opened at the surface of the magnesium fluoride particulate and an intra-particulate closed pore present in a state occluded from the surface of the magnesium fluoride particulate inside the magnesium fluoride particulate.

7. The magnesium fluoride particles of any one of claims 2-6, wherein
the grain boundary void-like pore is at least one of a grain boundary void-like open pore present in an opened state and a grain boundary void-like closed pore present in an occluded state.

8. The magnesium fluoride particles of any one of claims 1-7, wherein
an average particle size of the magnesium fluoride particulates is in a range between 1 nm and 100 nm.

9. The magnesium fluoride particles of any one of claims 1-8, wherein
an average particle size of the magnesium fluoride particulates is in a range between 1 nm and 50 nm.

10. The magnesium fluoride particles of any one of claims 1-9, wherein
the magnesium fluoride particulate has a refractive index in a range of 1.20 or higher and 1.40 or lower.

11. The magnesium fluoride particles of any one of claims 1-10, wherein
the magnesium fluoride particulate has a specific surface area by BET in a range of 150 m²/g or larger and 300 m²/g or smaller.

12. A dispersion solution of magnesium fluoride particles, comprising:
the magnesium fluoride particles of any one of claims 1-11; and
a dispersion medium that disperses the magnesium fluoride particles.

13. The dispersion solution of magnesium fluoride particles of claim 12, wherein
the dispersion medium includes a dispersant that promotes dispersion of the magnesium fluoride particles.

14. A composition for forming a low refractive index layer comprising:
the magnesium fluoride particles of any one of claims 1-11; and
a layer forming material in which the magnesium fluoride particles are dispersed.

15. A substrate with a low refractive index layer, comprising
a resin substrate;
a hard coated layer formed on the resin substrate; and
a low refractive index layer formed on the hard coated layer,
wherein the low refractive index layer is formed of the composition for forming a low refractive index layer of claim 14.

16. A method for producing magnesium fluoride particles each including at least one magnesium fluoride particulate, comprising:
preparing crystalline magnesium fluorosilicate;
generating crystalline magnesium fluoride having pores that support a supported substance by discharging gas from the crystalline magnesium fluorosilicate by performing thermal treatment on the crystalline magnesium fluorosilicate; and
generating magnesium fluoride particulates having the pores from the crystalline magnesium fluoride.

17. The method of claim 16, wherein
the at least one magnesium fluoride particulates includes a plurality of particulates,
the generating crystalline magnesium fluoride includes:
agglomerating particulates adjacent to each other of the plurality of particulates so as to form a grain boundary void-like pore between the particulates adjacent to each other, and
the grain boundary void-like pore serves as a gap that supports the supported substance.

18. The method of claim 16 or 17, wherein
the generating crystalline magnesium fluoride includes at least one of:
forming an intra-particulate open pore present in a state opened at the surface of the magnesium fluoride particulate; and
forming an intra-particulate closed pore present in a state occluded from the surface of the magnesium fluoride particulate inside the magnesium fluoride particulate.

19. The method of claim 17 or 18, wherein
the agglomerating includes at least one of:
forming a grain boundary void-like open pore present in an opened state; and
forming a grain boundary void-like closed pore present in an occluded state.

20. The method of any one of claims 16-19, wherein
the preparing includes:
generating slurry of agglomerated magnesium fluorosilicate particles from a mixed solution of a magnesium salt and a solution containing a fluorosilicate ion;
generating paste of magnesium fluorosilicate particles from the slurry of agglomerated magnesium fluorosilicate particles;
generating magnesium fluorosilicate particles from the paste of magnesium fluorosilicate particles;
generating slurry of magnesium fluorosilicate particulates by crushing the magnesium fluorosilicate particles; and
generating the crystalline magnesium fluorosilicate from the slurry of magnesium fluorosilicate particulates.

21. A method for producing a dispersion solution of magnesium fluoride particles comprising:
preparing the magnesium fluoride particles of any one of claims 1-11; and
dispersing the magnesium fluoride particles into a dispersion medium.

22. The method of claim 21, wherein
the dispersion medium includes a dispersant that promotes dispersion of the magnesium fluoride particles.

23. A method for producing a composition for forming a low refractive index layer, comprising:
preparing the magnesium fluoride particles of any one of claims 1-11; and
dispersing the magnesium fluoride particles into a layer forming material.

24. A method for manufacturing a substrate with a low refractive index layer, comprising:
preparing a resin substrate;
forming a hard coated layer on the resin substrate; and
forming a low refractive index layer on the hard coated layer,
wherein the low refractive index layer is formed of the composition for forming a low refractive index layer of claim 14.
